# EUROPÄISCHE PATENTSCHRIFT

(11) **EP 1 253 416 B1**
(45) Veröffentlichungstag und Bekanntmachung des Hinweises auf die Patenterteilung: **29.08.2012**
(21) Anmeldenummer: 02008276.4
(22) Anmeldetag: 19.04.2002
(51) Int. Cl.: G01M 17/007

(54) **Rollenprüfstand für Kraftfahrzeuge**
Roller test bench for road vehicles
Banc d'essai à rouleaux pour automobiles

(30) Priorität: 25.04.2001 DE 10120294
(43) Veröffentlichungstag der Anmeldung: 30.10.2002
(73) Patentinhaber: MAHA-AIP GmbH & Co. KG, 87490 Haldenwang (DE)
(72) Erfinder: Knestel, Anton, 87496 Hopferbach (DE)
(74) Vertreter: MERH-IP Matias Erny Reichl Hoffmann

(56) Entgegenhaltungen:
- EP-A- 0 246 345
- EP-A- 0 373 653
- EP-A- 0 634 638
- DE-A- 4 101 058
- DE-A- 19 900 620
- US-A- 3 554 023
- US-A- 4 077 255
- US-A- 5 337 600
- US-A- 5 452 605
- FREITAG ET AL: "SCHENCK: UNE NOUVELLE CONCEPTION DE BANC D'ESSAI ANTIPOLLUTION" INGENIEURS DE L'AUTOMOBILE, PARIS, FR, Nr. 704, 1. April 1996 (1996-04-01), Seiten 8,10-11, XP000584279 ISSN: 0020-1200

## Beschreibung

Die Erfindung betrifft einen Rollenprüfstand für Kraftfahrzeuge der im Oberbegriff des Patentanspruchs 1 angegebenen Gattung.

Zur Simulation unterschiedlicher Fahrbedingungen bei der Prüfung von fahrdynamischen Parametern werden vermehrt Rollenprüfstände für Kraftfahrzeuge eingesetzt. Die Prüfung der fahrdynamischen Parameter findet beispielsweise am Bandende einer Fertigungsanlage für Kraftfahrzeuge statt. Dies ermöglicht eine einfache, gleichbleibende und wiederholbare Sicherheits- und Qualitätsprüfung der hergestellten Fahrzeuge. Während der Simulation auf dem Prüfstand werden vorgegebene Fahrzyklen durchlaufen, wobei das Fahrzeug beispielsweise beschleunigt oder abbremst. Bei einer solchen Simulation werden Betriebsparameter des Fahrzeugs, z.B. die Leistung der Brennkraftmaschine, gemessen und die Funktionen von Komponenten, beispielsweise Bremsen oder Abgasreinigungsanlagen, geprüft.

Zur Durchführung der Untersuchungen stehen je nach Auslegung des Prüfstands entweder die beiden Räder einer Achse oder die Räder mehrerer Achsen auf dem Scheitelbereich je einer Aufstandsrolle bzw. im Rollenprisma eines Rollenpaares auf. Die Aufstandsrollen bzw. die Rollenpaare sind mit Antriebs-/Verzögerungsmaschinen gekoppelt, die entsprechend dem Prüfprogramm vorgegebene Drehmomente bzw. Zugkräfte erzeugen.

Zur Simulation von ausgewählten Fahrzuständen auf dem Rollenprüfstand werden die Fahrwiderstände und die aus Beschleunigungen bzw. Verzögerungen resultierenden Kräfte und Momente der bewegten Massen erfaßt und geregelt. Für die Funktionsprüfung von Bremssystemen und Antischlupfreglern für Kraftfahrzeuge ist es weiterhin notwendig, die Umlaufgeschwindigkeiten der einzelnen Aufstandsrollen gleich zu halten bzw. eine winkelsynchrone Rotation der Aufstandsrollen zu ermöglichen. Bei der Simulation einer Kurvenfahrt müssen jedoch die Umfangsgeschwindigkeiten der Aufstandsrollen für die zu einer Achse gehörenden Räder je nach Kurvenradius getrennt gesteuert werden. Bei der Prüfung von allradgetriebenen Fahrzeugen müssen zudem die Aufstandsrollen für die Vorder- und Hinterräder entsprechend synchron gesteuert werden, um mit gleicher Drehzahl bzw. Umfangsgeschwindigkeit umzulaufen.

Zunehmend wird bei der Qualitätsprüfung eines Kraftfahrzeugs auch eine akustische Prüfung durchgeführt. Durch die akustische Prüfung sollen unter anderem Probleme durch Ungenauigkeiten und überschrittene Toleranzen bei der Fertigung erkannt werden, die sich beispielsweise durch klappernde Türen, Auspuffanlagen, Fenster oder durch andere Geräusche äußern. Diese Geräusche können z.B. bei bestimmten Geschwindigkeiten des Fahrzeugs oder Drehzahlen der Brennkraftmaschine auftreten. Zur akustischen Prüfung der Fahrzeuge auf dem Rollenprüfstand ist deshalb eine möglichst geringe Geräuschentwicklung durch den Prüfstand notwendig.

Zur Erzielung von kurzen Prüfzeiten für Kraftfahrzeuge auf dem Rollenprüfstand müssen die Fahrzeuge möglichst einfach im Rollenprüfstand fixiert werden. Hierzu werden oftmals ausfahrbare Richtvorrichtungen verwendet. Während der Prüfung auf dem Rollenprüfstand muß der Fahrer das Fahrzeug durch Lenkbewegungen mit Hilfe einer Mittenanzeige im Prüfstand zentrieren und eine seitliche Bewegung des Fahrzeugs verhindern.

Aus der US 5 452 605 ist ein Rollenprüfstand für Kraftfahrzeuge mit Einachsantrieb bekannt, bei dem ein einziger Rollensatz zwei Aufstandsrollen enthält. Eine zwischen den Aufstandsrollen angeordnete elektrische Antriebsmaschine treibt beide Aufstandsrollen synchron an. Das Statorgehäuse der elektrischen Antriebsmaschine ist pendelnd gelagert und über eine Drehmoment- bzw. Kraftmeßeinrichtung am Rahmen des Prüfstands abgestützt. Änderungen des ausgeübten Drehmoments werden von der Drehmoment- bzw. Kraftmeßeinrichtung als Meßwerte erfaßt. Beispielsweise wird die bei einer Bremsprüfung des Kraftfahrzeugs in die Antriebsmaschine eingeleitete Bremskraft als Reaktionsmoment des Statorgehäuses von der Drehmoment- bzw. Kraftmeßeinrichtung erfaßt. Durch die mittig zwischen den beiden Aufstandsrollen für die Räder einer Fahrzeugachse angeordneten Antriebsmaschine kann der Abstand zwischen den Aufstandsrollen für die Räder einer Achse nur mit erheblichem Aufwand verstellt werden. Insbesondere ergibt sich, bedingt durch die mittlere Anordnung der Antriebsmaschine, ein großer Mindestabstand für die Aufstandsrollen. Weiterhin ist es mit einem derartigen Rollenprüfstand nicht möglich unterschiedliche Umlaufgeschwindigkeiten für die Aufstandsrollen einer Achse zu realisieren und somit Kurvenfahrten zu simulieren.

Die DE 39 20 277 zeigt einen Rollenprüfstand für Kraftfahrzeuge, bei dem jedes Rad des zu prüfenden Kraftfahrzeugs jeweils auf einem Rollenpaar (Doppelrolle) abgestützt ist. Jedes Rollenpaar wird von einer eigenen Antriebsmaschine angetrieben, denen Stromrichter vorgeschaltet sind und die jeweils von einem zugehörigen Regelverstärker angesteuert werden. Zwischen jeder Rolle und der zugehörigen Antriebsmaschine ist ein Drehmomentsensor angeordnet. Die Drehgeschwindigkeiten der einzelnen Maschinen werden durch Tachogeneratoren gemessen. Eine Steuereinheit steuert die Antriebsmaschinen zur Simulation von unterschiedlichen Fahrzuständen. Zur Simulation einer Kurvenfahrt können unterschiedliche Umfangsgeschwindigkeiten der kurveninneren bzw. kurvenäußeren Aufstandsrollen erzeugt werden. Die Antriebsmaschine und die beiden Aufstandsrollen des jeweiligen Rollenpaars sind mechanisch gekoppelt. Beispielsweise werden die beiden Aufstandsrollen durch einen auf Riemenscheiben laufenden Zahnriemen angetrieben. Der Nachteil einer solchen Anordnung besteht in dem lauten Antriebsgeräusch durch den Zahnriemen und die vielen drehenden Teile. Durch das laute Geräusch des Prüfstands wird eine akustische Prüfung des Fahrzeugs erschwert. Zudem ist ein solcher Antrieb der Aufstandsrollen über eine Riemenverbindung wartungsintensiv und weiterhin entstehen zusätzliche Reibungsverluste durch den Riemenantrieb.

Die DE 199 00 620 zeigt einen Rollenprüfstand, bei dem die beiden Aufstandsrollen (Scheitelrollen) für die Räder einer Achse eines zu prüfenden Fahrzeugs von einer gemeinsamen elektrischen Antriebsmaschine angetrieben werden. Zum genauen Einrichten des Fahrzeugs bzw. seiner Räder auf den Aufstandsrollen dienen ausfahrbare Richtvorrichtungen, deren schräge Stützstreben nach dem Richtvorgang in eine Ruhelage unterhalb der jeweiligen Überfahrplatte zurückgestellt werden. Weiterhin ist aus der DE 199 00 620 ein Verfahren zum Steuern der elektrischen Antriebsmaschinen für die Aufstandsrollen der Vorder- und Hinterachse des Kraftfahrzeugs bekannt. Mit Hilfe dieses Verfahrens kann ein Synchronlauf der Antriebsmaschinen und der ihnen zugeordneten Aufstandsrollen erzielt werden. Weiterhin können Veränderungen der rotierenden Drehmassen simuliert werden, indem entsprechend den jeweils auftretenden Winkelbeschleunigungen Kräfte erzeugt werden, die zu den Massenträgheitskräften hinzuaddiert oder abgezogen werden. Für diese Simulation ist es notwendig, die von einer Aufstandsrolle auf ein Rad des zu prüfenden Kraftfahrzeugs aufgebrachte Zugkraft genau zu steuern. Hierzu sind in der Regel Drehmomentsensoren zur Messung des Antriebsdrehmoments vorgesehen.

Die Druckschrift EP 0 246 345 zeigt einen Dynamometeraufbau, bei dem eine Summenschaltung mit jeweiligen Lastzellen verbunden ist. Die Summenschaltung mittelt Signale der Lastzellen und überträgt diese zu einem Mikroprozessor. Entsprechend dem Summensignal gibt der Mikroprozessor einen entsprechenden Befehl an einen Konverter und an einen Inverter, um den Frequenzausgang des Inverters derart zu ändern, dass alle Trommeln eine gleiche Geschwindigkeit erhalten.

Die Druckschrift US-A-4 077 255 zeigt ein Dynamometer, welches Mittel zum Absorbieren einer zu den Rollen zu übertragenen Leistung aufweist, wobei Erfassungsmittel vorgesehen sind, die die absorbierte Leistung erfassen. Die Mittel zum Erfassen der absorbierten Leistung sind innerhalb der Rolle angeordnet, um Platz zu sparen.

Aufgabe der Erfindung ist es, einen Rollenprüfstand für Kraftfahrzeuge zu schaffen, der bei konstruktiv verringertem Aufwand eine einfachere und verbesserte Prüfung von Kraftfahrzeugen ermöglicht.

Diese Aufgabe der vorliegenden Erfindung wird durch die Merkmale des unabhängigen Anspruchs gelöst. Merkmale bevorzugter Ausführungsformen der vorliegenden Erfindung werden in den abhängigen Ansprüchen beschrieben.

Diese Aufgabe wird erfindungsgemäß dadurch gelöst, daß die Aufstandsrolle auf einer Mittelachse drehbar gelagert ist und der Stator des Antriebsaggregats auf der Mittelachse der Aufstandsrolle sowie der Rotor als Außenläufer innen am Mantel der Aufstandsrolle befestigt ist. Durch die Anordnung des Antriebsaggregats in der jeweiligen Aufstandsrolle entsteht eine kompakte und platzsparende Rollenanordnung. Diese ermöglicht eine einfache Anpassung des Abstands der Aufstandsrollen für die Räder einer Achse des zu prüfenden Fahrzeugs. Da in dem erfindungsgemäßen Rollenprüfstand nur die Aufstandsrolle mit dem innen am Mantel angebrachten Rotor rotiert, wird die Anzahl der sich bewegenden bzw. drehenden Teile deutlich verringert. Durch die Reduzierung der zusätzlichen sich drehenden Massen kann eine genauere Steuerung der Aufstandsrollen erfolgen. Insbesondere ist kein Riemenantrieb zwischen Auf-standsrolle und Antriebsaggregat notwendig. Der erfindungsgemäße Rollenprüfstand ist somit geräuscharm, wartungsfreundlich und es entstehen weniger Reibungsverluste. Da die Aufstandsrollen getrennt angesteuert werden können, eignet sich der erfindungsgemäße Rollenprüfstand zur Simulation von Kurvenfahrten und für Einzelradprüfungen, wie z.B. Bremskraftermittlung eines Rads oder ABS-Test.

Die erfindungsgemäßen Aufstandsrollen können als Einzelrollen jeweils einem Rad des zu prüfenden Fahrzeugs zugeordnet sein oder in Form von Doppelrollen die Aufstandsflächen für jeweils ein Rad bilden. Die Aufstandsrollen bilden die Fahrbahnsimulationsflächen für die Fahrzeugräder von ein- oder zweispurigen Kraftfahrzeugen. Dabei müssen nicht alle Räder des zu prüfenden Fahrzeugs auf entsprechenden Aufstandsrollen aufstehen. Beispielsweise können für vorderradangetriebene Fahrzeuge zwei den Vorderrädern zugeordnete Aufstandsrollen für eine Fahrsimulation ausreichen.

Gemäß einer zweckmäßigen Ausgestaltung der Erfindung ist die drehfeste Mittelachse der Aufstandsrolle an einem Rahmen des Prüfstands befestigt. Durch das Innere der drehfesten Mittelachse können einfach Zuführungen, beispielsweise für das Antriebsaggregat, in das Innere der Aufstandsrolle geführt werden. Eine drehfeste Ausgestaltung der Mittelachse ermöglicht zudem einen einfachen Aufbau des Rollenprüfstands ohne aufwendige Lageranordnungen.

In einer besonderen Ausführung der Erfindung ist die Mittelachse als pendelnd drehbare Welle ausgestaltet, die über eine Drehmomentstütze und eine Kraftmeßeinrichtung an dem Rahmen abgestützt ist. Durch diese Anordnung kann eine genaue Messung des vom Antriebsaggregat erzeugten Drehmoments bzw. der an dem Mantel der Aufstandsrolle wirkenden Kraft erfolgen. Zweckmäßigerweise erfolgt die Kraftmessung durch eine Kraftmeßdose, die z.B. schwimmend am Rahmen des Prüfstands abgestützt ist. Durch die schwimmende Abstützung der Kraftmeßeinrichtung wird die Meßgenauigkeit erhöht, da Reibung und Verkantungen vermieden werden. Das gemessene Drehmoment bzw. die ermittelte Kraft kann zur Steuerung des Antriebsaggregats oder zur Kalibrierung/Justierung der Steuereinheit verwendet werden.

Zur Befestigung von rotierenden Vorrichtungen kann die Aufstandsrolle zweckmäßigerweise fest mit einem drehbaren Wellenzapfen, der zentriert in Verlängerung der Mittelachse angeordnet ist, verbunden sein. An dem mit der Aufstandsrolle mitdrehenden Wellenzapfen können beispielsweise eine Bremsscheibe, ein Drehgeber und/oder eine Riemenscheibe befestigt sein.

Der Wellenzapfen ist vorteilhaft im Rahmen und an der Mittelachse drehbar gelagert. Eine besondere Ausgestaltung der Erfindung weist eine drehfeste Befestigung der Mittelachse an dem Rahmen des Prüfstands auf einer Seite der Aufstandsrolle und einen drehbar gelagerten Wellenzapfen auf der anderen Seite der Aufstandsrolle auf. Diese Anordnung ermöglicht sowohl eine einfache Zuführung für Versorgungsleitungen des Antriebsaggregats als auch eine einfache Befestigung von rotierenden Einrichtungen an dem drehenden Wellenzapfen.

In einer bevorzugten Ausführung der Erfindung sind zwei Aufstandsrollen für jeweils ein Rad des Fahrzeugs vorgesehen (Doppelrollen). Die Antriebsaggregate der Aufstandsrollen werden zweckmäßig derart angesteuert, daß die Umfangsgeschwindigkeiten der Aufstandsrollen gleich sind. Hierfür kann die auf das Rad zu übertragende Kraft für eine Aufstandsrolle vorgegeben, die resultierende Umfangsgeschwindigkeit dieser Aufstandsrolle gemessen und als Sollwert für die Umfangsgeschwindigkeit der zweiten Aufstandsrolle vorgegeben werden. Die Antriebsaggregate für die zwei Aufstandsrollen eines Rades können auch durch eine gemeinsame Stelleinheit angesteuert werden.

Eine weitere Ausgestaltung der Erfindung zeichnet sich durch eine Aufstandsrolle und eine mechanisch mit der Aufstandsrolle gekoppelte Laufrolle für jeweils ein Rad des Fahrzeugs aus. Das Rad des Fahrzeugs steht auf dem Rollenprisma aus der Aufstandsrolle und der Laufrolle auf. Die mechanische Kopplung zwischen Aufstandsrolle und Laufrolle kann beispielsweise durch einen Zahnriemen, der über eine am drehenden Wellenzapfen angebrachte Riemenscheibe läuft, erfolgen. Ein derartiger Doppelrollenprüfstand weist nur ein Antriebsaggregat für eine Doppelrolle auf und kann deshalb kostengünstig hergestellt werden. Da die einzelnen Räder des Fahrzeugs getrennt gesteuert werden können, eignet er sich auch zur Simulation von Kurvenfahrten. Die erfindungsgemäßen Aufstandsrollen mit integriertem Außenläufermotor sind zu dem kompakt, wartungs- und geräuscharm.

Erfindungsgemäß ist das Antriebsaggregat als Drehstrom-Asynchronmotor ausgebildet. Das Antriebsaggregat dient zum Beschleunigen oder Verzögern der zugehörigen Aufstandsrolle, die eine entsprechende Kraft auf das Fahrzeugrad ausübt. Das Antriebsaggregat der Aufstandsrolle wirkt je nach Betriebsfall als Motor oder Generator und beschleunigt bzw. verzögert das zugehörige Fahrzeugrad.

Zur Simulation von ausgewählten Fahrzuständen steuert bei einem bevorzugten System der Erfindung die Steuereinrichtung unter Berücksichtigung spezifischer Fahrzeugdaten die Antriebsaggregate des Rollenprüfstands. Die Steuerung kann durch einen Prozeßrechner oder ein programmierbares Steuergerät erfolgen. Zweckmäßig weist die Steuereinrichtung Eingabe- und Ausgabeeinheiten zur Bedienung und zur Datenkommunikation mit weiteren Steuer- oder Zentraleinrichtungen auf.

Die Steuereinheit steuert die jeweiligen Antriebsaggregate der Aufstandsrollen je nach Prüfprogramm mit gleicher Umfangsgeschwindigkeit bzw. winkelsynchron oder mit unterschiedlichen Umfangsgeschwindigkeiten zur Simulation von Kurvenfahrten.

Zur Simulation von Fahrzuständen werden entsprechende Lasten in Form von Zugkräften auf die Fahrzeugräder aufgegeben. Durch die entsprechenden Zugkräfte können unterschiedliche Fahrwiderstände beispielsweise für Steigungen oder für Gefälle simuliert werden. Weiterhin kann durch die Steuereinrichtung eine elektrische Massensimulation unter Berücksichtigung von spezifischen Fahrzeugdaten erfolgen.

Vorteilhafterweise weist ein erfindungsgemäßer Rollenprüfstand eine Meßeinrichtung zur Erfassung der Drehgeschwindigkeit der Aufstandsrolle auf. Zweckmäßig wird die Drehgeschwindigkeit jeder Aufstandsrolle ermittelt. Zur Messung der Drehgeschwindigkeit können an der Aufstandsrolle Sensoren, beispielsweise in Form eines Meßrings, angebracht sein. Bevorzugt können auch Drehgeber am drehenden Wellenzapfen befestigt sein. Die Erfassung der Drehgeschwindigkeit der Aufstandsrolle kann mittels Inkremental-Encoder oder sogenannter Sinus/Cosinus-Encoder erfolgen. Diese Drehwinkelfühler haben eine besonders hohe Auflösung für die Messung von Winkeldifferenzen.

Eine weitere bevorzugte Ausgestaltung der Erfindung zeichnet sich durch eine der Aufstandsrolle zugeordnete Bremseinrichtung aus. Die Bremseinrichtung ermöglicht ein einfaches und sicheres Auffahren des Kraftfahrzeugs auf den Rollenprüfstand, indem die Aufstandsrollen zum Auffahren blockiert werden. Weiterhin kann die Bremseinrichtung die Bremswirkung des Antriebsaggregats beim Verzögern des Fahrzeugrads unterstützen.

Zweckmäßig weist die Bremseinrichtung eine an der drehbaren Wellen befestigte Bremsscheibe oder einen an der Aufstandsrolle befestigten Bremsring auf. Die Bremskraft kann durch eine an der Bremsscheibe oder dem Bremsring angreifende Bremszange aufgebracht werden. Die Bremswirkung kann reibschlüssig oder induktiv, beispielsweise durch eine Wirbelstrombremse, erfolgen. Vorteilhafterweise zeichnet sich die Bremseinrichtung dadurch aus, daß eine vorgegebene einstellbare Bremskraft eingeleitet werden kann.

Zur Kalibrierung/Justierung des durch das Antriebsaggregat erzeugten Drehmoments bzw. der erzeugten Kraft kann eine Kraftmeßeinrichtung zur Ermittlung der aufgebrachten Bremskraft vorgesehen sein. Bevorzugt ist die Bremseinrichtung pendelnd gelagert und über eine Drehmomentstütze und eine Kraftmeßeinrichtung an dem Rahmen des Prüfstands abgestützt.

Ein besonders bevorzugtes System der Erfindung weist eine Innenkühlung der Aufstandsrolle und des Antriebsaggregats auf. Durch die Innenkühlung wird verhindert, daß der Außenmantel der Aufstandsrolle und das darauf aufstehende Fahrzeugrad sich durch Wärme des Antriebsaggregats erwärmen. Die Kühlung kann selbstbelüftet oder fremdbelüftet erfolgen.

Zweckmäßig weist die Innenkühlung Luftleitkörper oder Flügelräder auf. Diese können beispielsweise an den Seitenflächen der Aufstandsrolle angebracht sein und einen Luftstrom zur Kühlung der Aufstandsrolle und des Antriebsaggregats erzeugen.

Vorteilhafterweise erfolgt die Zuführung eines Kühlmittels durch das Innere der Mittelachse. Die Kühlung kann mittels Luft oder einer Flüssigkeit als Kühlmittel erfolgen. Eine Zuführung des Kühlmittels durch das Innere der drehfesten Mittelachse kann besonders einfach erfolgen. Beispielsweise kann ein Gebläse Luft durch das Innere der Mittelachse zur Kühlung der Aufstandsrolle und des Antriebsaggregats zuführen. Die Luftleitbleche können derart angeordnet sein, daß der Luftstrom vom Inneren der Aufstandsrolle nach außen fließt. Auf diese Weise kann sichergestellt werden, daß keine Schmutzteilchen, z.B. durch Reifenabrieb, durch die Kühlluft in die Aufstandsrolle gelangen.

Eine besonders zweckmäßige Gestaltung der Aufstandsrolle sieht eine Hinterlüftung zwischen dem Rotor und dem Mantel der Aufstandsrolle zur Kühlung des Antriebsaggregats vor. Weiterhin kann durch eine derartige Hinterlüftung eine Erwärmung des Außenmantels der Aufstandsrolle verhindert werden.

Zum Zentrieren des Fahrzeugs bzw. seiner Räder auf den Aufstandsrollen des Prüfstands können in weiterer Ausgestaltung der Erfindung Einrichtungen, die das Fahrzeug auf den Aufstandsrollen zentrieren und gegen seitliche Bewegungen sichern, vorgesehen sein. Durch die Zentriereinrichtungen wird der Fahrer des zu prüfenden Fahrzeugs während des Prüfvorgangs entlastet, da er nicht durch Lenkbewegung das Fahrzeug im Prüfstand zentrieren und gegen seitliche Bewegungen sichern muß. Dies führt zu einer deutlichen Erhöhung der Sicherheit für Fahrer und Fahrzeug und einer Verringerung der Prüfdauer.

Bevorzugt werden als Zentriereinrichtungen mindestens einer Aufstandsrolle zwei Anlaufrollen zugeordnet. Die Anlaufrollen sind derart oberhalb der zugehörigen Aufstandsrolle angeordnet, daß das aufstehende Fahrzeugrad durch die Anlaufrollen eine laterale Kraft erfährt, die das Fahrzeug auf den Aufstandsrollen zentriert. Zusätzlich zur Mittenzentrierung des Fahrzeugs kann dieses durch die Anlaufrollen gegen Vorwärts/Rückwärtsbewegungen gesichert werden. Zweckmäßig ist der Durchmesser der Anlaufrollen kleiner als der Durchmesser der Fahrzeugräder und die Länge der Anlaufrollen größer als die Breite der Fahrzeugräder. Zum Auffahren des Fahrzeugs können einige der Anlaufrollen versenkt werden und die anderen als Anschlag für die Räder dienen.

Eine bevorzugte Ausgestaltung der Erfindung sieht für das jeweilige Rad einer Fahrzeugachse mindestens eine Anlaufrolle vor, die unter einem spitzen Winkel zur Längsachse der jeweiligen Aufstandsrolle angeordnet ist. Bevorzugt ist die in Fahrzeugrichtung vordere Anlaufrolle schräg zur Längsachse der jeweiligen Aufstandsrolle angeordnet. Der spitze Winkel zwischen Mittelachse der Anlaufrolle und Längsachse der jeweiligen Aufstandsrolle kann zur Fahrzeugmitte oder nach außen ausgerichtet sein. Zur Erzeugung einer verstärkten Zentrierkraft können auch beide Anlaufrollen einer Aufstandsrolle unter einem spitzen Winkel zur Längsachse der jeweiligen Aufstandsrolle angeordnet sein. Zweckmäßig erfolgt die Anordnung der schrägen Anlaufrollen für die Räder einer Fahrzeugachse unter Erhalt eines Spiels zwischen den Fahrzeugrädern und den Anlaufrollen, so daß eine geringe seitliche Bewegung des Fahrzeugs möglich ist, bevor ein Fahrzeugrad an einer Anlaufrolle ansteht. Durch diese Anordnung wird ein Verklemmen der Fahrzeugräder zwischen den schräg stehenden Anlaufrollen verhindert.

Um das Fahrzeug gegen seitliche Bewegungen zu sichern, ist in einer weiteren Ausgestaltung der Erfindung für das jeweilige Rad einer Fahrzeugachse mindestens eine Anlaufrolle konisch ausgebildet. Durch die konisch ausgebildete Anlaufrolle, die an dem Fahrzeugrad anliegt, kann eine laterale Kraft entstehen, die das Fahrzeug im Prüfstand zentriert. Die konischen Anlaufrollen können derart angeordnet sein, daß die verjüngten Enden nach außen, vom Fahrzeug weg, oder zur Fahrzeugmitte zeigen. Durch eine seitliche Bewegung des Fahrzeugs steht mindestens ein Fahrzeugrad an einer konischen Anlaufrolle an und erfährt eine seitlich gerichtete Kraft, die das Fahrzeug in die mittige Position zwischen den Aufstandsrollen zurückbewegt. Zur Erzielung einer größeren lateralen Kraft können auch beide Anlaufrollen der jeweiligen Aufstandsrolle konisch ausgebildet sein. Weiterhin können konisch ausgebildete und schräg stehende Anlaufrollen zur Erzielung einer besonderen Wirkung kombiniert werden.

Eine hinsichtlich konstruktivem Aufwand besonders vorteilhafte Weiterbildung der Erfindung zeichnet sich dadurch aus, daß mindestens eine Anlaufrolle zwei konisch ausgeformte Endabschnitte aufweist, die sich nach außen erweitern. Durch eine derart ausgeformte Anlaufrolle (Leitanlaufrolle) kann ein Fahrzeug in besonders einfacher Weise im Prüfstand zentriert und gegen seitliche Bewegung gesichert werden. Die Leitanlaufrolle ermöglicht eine automatische Fixierung des Fahrzeugs ohne Eingreifen des Fahrers.

Mindestens eine Anlaufrolle kann zweckmäßig in Rollenlängsache verschiebbar angeordnet sein und das Fahrzeugrad in unterschiedlichen Positionen auf der Aufstandsrolle zentrieren. Beispielsweise ist die Leitanlaufrolle auf einer Spindel angeordnet und kann in ihrer Längsrichtung verfahren werden. Dies führt zu einer Art "Spurwechsel" des Fahrzeugs auf den Aufstandsrollen und ist insbesondere von Vorteil, wenn die Aufstandsrollen unterschiedliche Mantelabschnitte mit verschiedenem Belag aufweisen. Beispielsweise ist ein Teil der Aufstandsrolle mit Stegen für eine Rüttelprüfung des Fahrzeugs versehen, während ein anderer Teil der Aufstandsrolle einen glatten und leisen Belag für eine Akustikprüfung aufweist. Durch das Verschieben der Leitanlaufrolle kann das Fahrzeug in einem Prüfzyklus auf einem einzigen Prüfstand unterschiedlichen "Fahrbahnbelägen" für unterschiedliche Testbedingungen ausgesetzt werden. Somit können verschiedene Prüfungen oder Messungen auf dem gleichen Prüfstand durchgeführt werden. Der "Spurwechsel" des Fahrzeugs erfolgt durch das Verfahren der Leitanlaufrolle ohne Lenkbewegungen des Fahrers.

Eine weitere Ausgestaltung der Erfindung sieht vor, daß bei Verwendung von Doppelrollen mindestens eine der beiden einem Fahrzeugrad zugeordneten Aufstandsrollen einfach oder doppelt konisch ausgebildet ist. Durch die konische Ausbildung der Aufstandsrolle wird ein ähnlicher Effekt wie durch die konisch ausgebildeten Anlaufrollen erzielt und das Fahrzeug zentriert. Zwei einfach konisch ausgebildete Aufstandsrollen können z.B. den Rädern einer Fahrzeugachse gegensinnig zugeordnet sein. Eine doppelt konisch ausgebildete Aufstandsrolle kann als Leitrolle die Zentrierung des Fahrzeugs bewirken.

Da eine zusätzliche Sicherung des Fahrzeugs in Vorwärts/Rückwärtsrichtung bei Doppelrollen meist nicht nötig ist, kann dann auf Anlaufrollen verzichtet werden. Die konische Ausbildung mindestens einer Aufstandsrolle bewirkt die seitliche Zentrierung des Fahrzeugs im Prüfstand.

Eine bevorzugte Ausgestaltung des Rollenprüfstands zeichnet sich dadurch aus, daß zumindest ein Rollensatz, der zwei Aufstandsrollen bzw. zwei Doppelrollen für die Räder einer Achse des zweispurigen Fahrzeugs aufweist, längsverfahrbar ist. Ein längsverfahrbarer Rollensatz ermöglicht eine einfache Anpassung des Rollenprüfstands auf die jeweilige Fahrzeuglänge. Die Rollensätze sind an dem Rahmen des Prüfstands angebracht und können in einer Grube versenkt angeordnet sein.

Für die Steuerung des Antriebsaggregats zur Simulation von ausgewählten Fahrzuständen ist eine genaue Ermittlung der von der Aufstandsrolle auf ein Fahrzeugrad aufgebrachten Zugkraft erforderlich. Üblicherweise werden hierfür Drehmomentmeßeinrichtungen verwendet. Neuerdings sind jedoch Steuereinrichtungen für elektrische Antriebsmotoren verfügbar, bei denen der Motorstrom mit ausreichender Genauigkeit zur Ermittlung des Antriebsmoments des Motors herangezogen werden kann. Insbesondere Frequenzumrichter für Synchronmotoren liefern einen genauen momentbildenden Strom. Dieser momentbildende Strom kann über den Rollenhalbmesser in eine Antriebskraft für das Antriebsaggregat umgerechnet werden. Zur Berücksichtigung der Einflüsse durch die Aufstandsrolle muß diese errechnete Antriebskraft korrigiert werden.

Üblicherweise wird hierzu die Antriebskraft für die jeweilige Aufstandsrolle kalibriert/justiert, indem zwischen zwei Aufstandsrollen eine Drehmomentmeßwelle angebracht wird. Die zu kalibrierende Aufstandsrolle wird mit dem zugehörigen Antriebsaggregat angetrieben und über die Drehmomentmeßwelle mit einer vorgegebenen Kraft gebremst. Der Nachteil dieses Verfahrens besteht in dem aufwendigen Anbringen der Meßwelle zwischen zwei Aufstandsrollen und der eingeschränkten Genauigkeit der Kalibrierung/Justierung.

Erfindungsgemäß weist der Rollenprüfstands einen Steuerrechner auf, der dazu geeignet ist, ein Verfahren zum Ermitteln der von einer Aufstandsrolle auf ein Fahrzeugrad aufgebrachten Zugkraft F_{z} zu realiesieren, wobei das Verfahren die folgende Schritte umfaßt:
Ermitteln einer Antriebskraft F für die Aufstandsrolle aus dem Strom I des Antriebsaggregats;
Messen der Umfangsgeschwindigkeit v der Aufstandsrolle;
Korrigieren der Antriebskraft F um die parasitären Verluste F_{P} der Aufstandsrolle durch Reibung und Ventilation für die gemessene Umfangsgeschwindigkeit v unter Erhalt der korrigierten Antriebskraft F';
Ermitteln eines Korrekturwertes F_{K} aus der Umfangsgeschwindigkeit v;
Ermitteln der Zugkraft F_{z} aus der korrigierten Antriebskraft F' und dem Korrekturwert F_{K}.

Das Verfahren sieht somit eine Korrektur der Antriebskraft um die parasitären Verluste vor. Die Zugkraft wird anschließend aus der korrigierten Antriebskraft und einem weiteren Korrekturwert ermittelt, der eine genauere Kalibrierung/Justierung ermöglicht.

Die Antriebskraft auf dem Mantel der Aufstandsrolle kann relativ einfach aus dem Antriebsmoment des Antriebsaggregats und dem Aufstandsrollenhalbmesser berechnet werden. Durch den meist weitgehend linearen Zusammenhang zwischen momentbildendem Strom und Antriebsmoment einer elektrischen Antriebsmaschine läßt sich das Antriebsmoment aus dem bekannten Strom ermitteln.

Eine mögliche Korrektur der Antriebskraft um die parasitären Verluste sieht eine additive Verknüpfung des ermittelten Verlustwerts vor. Der Korrekturwert zur Ermittlung der Zugkraft kann ebenfalls additiv (gegebenenfalls unter Berücksichtigung der Kraftrichtung, d.h. des Vorzeichens) oder multiplikativ mit der korrigierten Antriebskraft verrechnet werden.

Erfindungsgemäß wird der Korrekturwert aus einem Korrekturkennfeld ermittelt. In dem komplexen Korrekturkennfeld sind für unterschiedliche Umfangsgeschwindigkeiten die Differenzen zwischen der korrigierten Antriebskraft und einer Referenzkraft gespeichert. Der Korrekturwert für die jeweilige Umfangsgeschwindigkeit wird aus dem Korrekturkennfeld ausgelesen und mit der korrigierten Antriebskraft verrechnet.

In einer bevorzugten Ausgestaltung der Erfindung wird zur Ermittlung des Korrekturwerts auch die eventuell korrigierte Antriebskraft herangezogen. In einem solchen Korrekturkennfeld sind die Differenzen zwischen der korrigierten Antriebskraft und einer Referenzkraft für unterschiedliche Umfangsgeschwindigkeiten und unterschiedliche Antriebskräfte gespeichert.

Eventuell fehlende, d.h. nicht gespeicherte, Korrekturwerte können durch Interpolation aus bekannten Korrekturwerten für ähnliche Umlaufgeschwindigkeiten und/oder Antriebskräfte ermittelt werden.

Die Ermittlung der Referenzkraft erfolgt erfindungsgemäß durch eine Kraftmeßeinrichtung, bevorzugt durch eine Kraftmeßeinrichtung die über eine Drehmomentstütze mit einer pendelnd gelagerten Welle des Antriebsaggregats verbunden ist. Die Kraftmeßeinrichtung kann z.B. die durch das Antriebsaggregat aufgebrachte Kraft ermitteln. Diese gemessene Kraft wird als Referenzkraft bei der Festlegung des Korrekturkennfelds berücksichtigt.

In einer weiteren vorteilhaften Ausgestaltung der Erfindung wird die Referenzkraft durch eine Kraftmeßeinrichtung einer der Aufstandsrolle zugeordneten Bremseinrichtung ermittelt. Die Kraftmeßeinrichtung ermittelt die von der Bremseinrichtung auf die Aufstandsrolle eingeleitete Kraft. Diese Kraft wird als Referenzkraft für unterschiedliche Umfangsgeschwindigkeiten zur Erstellung des Korrekturkennfelds verwendet. Beispielsweise wird das Antriebsaggregat mit konstanter Drehzahl betrieben, eine vorgegebene Referenzkraft über die Bremseinrichtung auf die Aufstandsrolle eingeleitet und der Motorstrom ermittelt. Die Differenz zwischen aus Motorstrom bestimmter Antriebskraft und Referenzkraft wird in dem Korrekturkennfeld gespeichert.

In einer weiteren Ausgestaltung kann die Referenzkraft durch das Beschleunigen oder Verzögern der Aufstandsrolle durch das Antriebsaggregat und dem Messen der resultierenden Rollenbeschleunigung ermittelt werden. Dabei wird die Referenzkraft als resultierende Kraft auf die Aufstandsrolle aus gemessener Rollenbeschleunigung und der trägen Masse der Aufstandsrolle unter Zuhilfenahme des zweiten Newton'schen Gesetzes (F_{R} = m · a) bestimmt. Dieses Verfahren zeichnet sich dadurch aus, daß keine Kraftmeßeinrichtungen zur Ermittlung der Referenzkraft vorgesehen sind. Die Aufstandsrolle wird durch unterschiedliche vorgegebene Antriebskräfte mehrfach beschleunigt oder verzögert und die jeweilige Referenzkraft aus gemessener Rollbeschleunigung ermittelt. In dem Korrekturkennfeld werden für unterschiedliche Umfangsgeschwindigkeiten die Differenzen zwischen der korrigierten Antriebskraft und der berechneten Referenzkraft gespeichert.

Durch das Verfahren vereinfacht sich die Erstellung des komplexen Korrekturkennfelds, da keine Drehmomentmeßwelle zwischen zwei Aufstandsrollen angebracht werden muß. Der Prüfstand kann zu jedem Zeitpunkt ohne Um- oder Anbauten kalibriert/justiert werden.

Vorteilhaft werden die parasitären Verluste der Aufstandsrolle für unterschiedliche Umfangsgeschwindigkeiten der Aufstandsrolle gespeichert. Nicht gespeicherte parasitäre Verluste können durch Interpolation ermittelt werden. Vorteilhafterweise können die parasitären Verluste auch nach einem Modell, insbesondere nach einem Polynomansatz, berechnet werden. Die Parameter des Modells können aus gemessenen Verlusten für unterschiedliche Umfangsgeschwindigkeiten ermittelt werden. Die Ermittlung der parasitären Verluste kann auch unter Berücksichtigung weiterer Parameter wie Temperatur, Luftdruck, Lagertemperatur oder ähnliches erfolgen.

In einer zweckmäßigen Ausgestaltung werden die gespeicherten parasitären Verluste, oder das Modell der parasitären Verluste (für unterschiedliche Umfangsgeschwindigkeiten) durch das Beschleunigen der Aufstandsrolle auf die jeweilige Umfangsgeschwindigkeit, das Abschalten des Antriebsaggregats und das Messen der Rollenbeschleunigung bei der Verzögerung durch Reibung und Ventilation ermittelt. Nach dem Abschalten des Antriebsaggregats wird die Rolle durch die parasitären Verluste verzögert. Diese Verzögerung wird gemessen und unter Berücksichtigung des zweiten Newton'schen Gesetzes in eine Korrekturkraft für die parasitären Verluste umgerechnet.

Nachdem die Korrekturwerte für die parasitären Verluste für unterschiedliche Umfangsgeschwindigkeiten ermittelt wurden, müssen diese ermittelten Korrekturwerte von Zeit zu Zeit überprüft werden, da die parasitären Verluste sich durch Umwelteinflüsse und Lagerverschleiß ändern können. Eine solche Überprüfung (Verifikation) der ermittelten parasitären Verluste sollte möglichst einfach und ohne zusätzliche Einrichtungen durchführbar sein.

Das Verfahren zum Verifizieren der ermittelten parasitären Verluste zeichnet sich dadurch aus, daß die Aufstandsrolle für unterschiedliche Umfangsgeschwindigkeiten derart durch das Antriebsaggregat angetrieben wird, daß die korrigierte Antriebskraft die ermittelten parasitären Verluste für die jeweilige Umfangsgeschwindigkeit ausgleicht. Die Antriebskraft der Aufstandsrolle wird dazu so gewählt, daß die um die parasitären Verluste korrigierte Antriebskraft kompensiert wird oder verschwindet, d.h. Null wird. Sind die gespeicherten oder durch das Modell berechneten parasitären Verluste für die jeweilige Umfangsgeschwindigkeit der Aufstandsrolle korrekt bestimmt, so tritt keine resultierende Beschleunigungskraft an der Aufstandsrolle auf.

In dem Verfahren wird deshalb die resultierende Beschleunigung der Aufstandsrolle gemessen und ausgewertet. Stimmen die gespeicherten oder berechneten parasitären Verluste mit den tatsächlichen Verlusten der Aufstandsrolle durch Reibung und Ventilation überein, so befindet sich die Aufstandsrolle im Gleichgewichtszustand und es tritt keine Beschleunigung auf, d.h. die Aufstandsrolle bewegt sich mit gleichförmiger Umfangsgeschwindigkeit. Stimmen die gespeicherten oder berechneten parasitären Verluste nicht mit den tatsächlichen Reibungs- und Ventilationsverlusten der Aufstandsrolle überein, so ändert sich die Umfangsgeschwindigkeit der Aufstandsrolle. Da die Umfangsgeschwindigkeit der Aufstandsrolle einfach und sehr genau gemessen werden kann, ermöglicht das Verfahren eine vorteilhafte Möglichkeit zur Verifikation der gespeicherten oder berechneten parasitären Verluste. Die Verifikation kann deshalb ohne großen Aufwand beliebig oft durchgeführt werden.

Durch Umwelteinflüsse, wie z.B. Luftdruck, Temperatur, Verschleiß, Verschmutzung oder Alterung, können sich verschiedene Parameter eines Rollenprüfstands im Laufe der Zeit ändern, so daß die ermittelten Werte für parasitäre Verluste und/oder die in dem Korrekturkennfeld gespeicherten Korrekturwerte auf ihre Richtigkeit überprüft (verifiziert) werden müssen.

Um die Genauigkeit des Verfahrens zum Ermitteln der aufgebrachten Zugkraft sicherzustellen, sieht eine bevorzugte Ausgestaltung des Verfahrens zum Verifizieren der ermittelten parasitären Verluste und/oder des ermittelten Korrekturkennfelds vor, das sich dadurch auszeichnet, daß die Aufstandsrolle durch das Antriebsaggregat zum Erzielen einer vorgegebenen Zugkraft beschleunigt und die auftretende Rollenbeschleunigung gemessen wird. Die resultierende Beschleunigung der Aufstandsrolle kann sowohl in Form einer Geschwindigkeitszunahme als auch in Form einer Verringerung der Umfangsgeschwindigkeit erfolgen. Aus der gemessenen Rollenbeschleunigung und der trägen Masse der Aufstandsrolle wird die resultierende Kraft auf die Aufstandsrolle bestimmt und mit der vorgegebenen Zugkraft verglichen. Die Bestimmung der resultierenden Kraft erfolgt vorzugsweise unter Anwendung des zweiten Newton'schen Gesetzes, nach dem sich eine Kraft als Produkt aus Masse und Beschleunigung bestimmen läßt. Durch den Vergleich der nach dem Verfahren ermittelten Zugkraft mit der resultierten Kraft auf die Aufstandsrolle können die im Verfahren zum Ermitteln der Zugkraft verwendeten Korrekturgrößen überprüft und verifiziert werden. Da dieses Verfahren zum Verifizieren keine Kraft oder Drehmomentmeßeinrichtungen benötigt und ohne Umbauten am Rollenprüfstand durchgeführt werden kann, kann die Verifizierung ohne großen Aufwand häufig durchgeführt werden. Auf diese Weise kann eine hohe Genauigkeit bei der Ermittlung der Zugkraft gewährleistet werden.

Das Verfahren zum Ermitteln der von einer Aufstandsrolle eines Rollenprüfstands auf ein Fahrzeugrad aufgebrachten Zugkraft eignet sich für viele Arten von Rollenprüfständen mit verschiedenen Antriebsaggregaten. Es ermöglicht eine genaue Ermittlung der Zugkraft aus einer Betriebsgröße des Antriebsaggregats (z.B. momentbildender Strom), bei der Einflußgrößen des Prüfstands wie parasitäre Verluste auf die Zugkraft berücksichtigt werden. Durch die Verwendung eines komplexen Korrekturkennfelds, in dem abhängig von Umlaufgeschwindigkeit und/oder Antriebskraft Korrekturwerte gespeichert sind, können auch komplexe nichtlineare Effekte, beispielsweise zwischen momentbildendem Strom des Antriebsaggregats und Zugkraft, berücksichtigt werden.

Weitere Besonderheiten und Vorzüge der Erfindung lassen sich den Zeichnungen und der folgenden Beschreibung bevorzugter Ausführungsbeispiele entnehmen. Es zeigen:
Fig. 1 schematisch einen Rollenprüfstand gemäß der Erfindung zur Prüfung von zweispurigen Kraftfahrzeugen mit Zwei- und Vierradantrieb in Seitenansicht;
Fig. 2 eine schematische Darstellung einer Aufstandsrolle mit integriertem Außenläufermotor und drehfester Mittelachse;
Fig. 3 eine schematische Darstellung einer Aufstandsrolle mit integriertem Außenläufermotor und drehbarem Wellenzapfen;
Fig. 4 eine schematische Darstellung einer Aufstandsrolle mit integriertem Außenläufermotor und pendelnd drehbarer Welle;
Fig. 5 einen Schnitt durch zwei Ausführungsbeispiele für erfindungsgemäße Aufstandsrollen;
Fig. 6 eine schematische Darstellung einer möglichen Anordnung von Anlaufrollen zum Zentrieren eines Fahrzeugs;
Fig. 7 eine schematische Darstellung einer möglichen Anordnung von konischen Anlaufrollen zur Zentrieren eines Fahrzeugs;
Fig. 8 eine schematische Darstellung von Anlaufrollen mit zwei konisch ausgeformten Endabschnitten;
Fig. 9 ein Ablaufdiagramm für das Verfahren zur Ermittlung der auf ein Fahrzeugrad aufgebrachten Zugkraft;
Fig. 10 eine schematische Darstellung des Verfahrens zur Ermittlung der auf ein Fahrzeugrad aufgebrachten Zugkraft;
Fig. 11 eine weitere schematische Darstellung des Verfahrens zur Ermittlung der Zugkraft; und
Fig. 12 eine schematische Darstellung des Verfahrens zum Prüfen/Verifizieren.

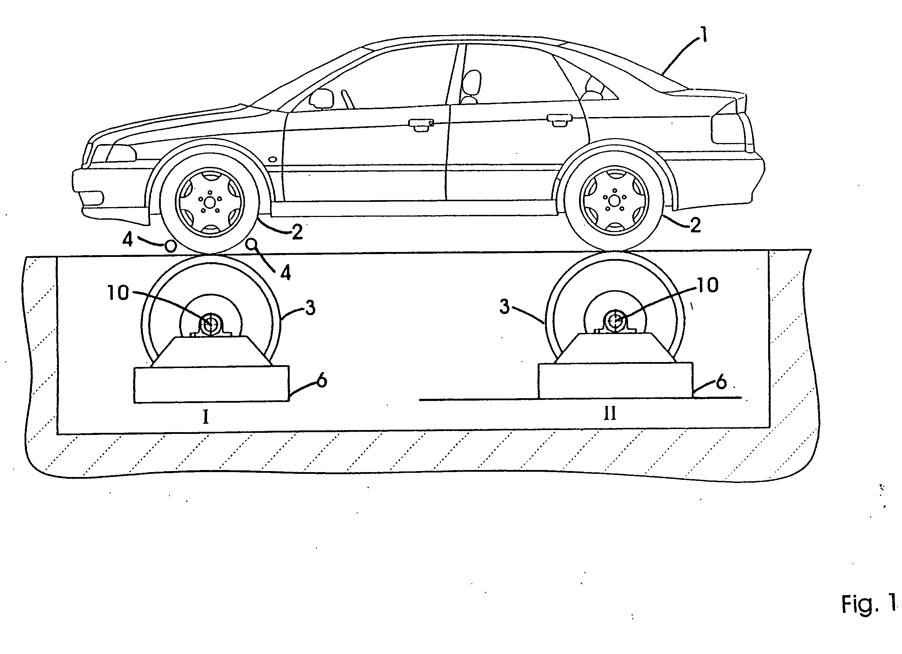

Fig. 1 zeigt einen Rollenprüfstand nach dem Scheitelrollenprinzip zur Prüfung von Kraftfahrzeugen mit einer oder zwei angetriebenen Achsen. Der Rollenprüfstand verfügt über zwei in einer gemeinsamen Grube angeordnete Rollensätze I und II. Der Rollensatz I ist ortsfest montiert und der Rollensatz II ist zur Anpassung an unterschiedliche Fahrzeuglängen auf einem geeigneten Unterbau in der Grube längsverfahrbar. Jeder Rollensatz I und II enthält zwei Aufstandsrollen 3, die jeweils auf einer Mittelachse drehbar gelagert sind. Jede Aufstandsrolle 3 weist ein Antriebsaggregat zum Antreiben oder Verzögern auf.

Ein zu prüfendes Fahrzeug 1 wird in den Prüfstand gemäß Fig. 1 eingefahren, so daß seine Räder 2 auf dem Scheitelbereich je einer Aufstandsrolle 3 aufstehen. Zum Einrichten und Zentrieren des Fahrzeugs 1 im Prüfstand sind Zentriereinrichtungen 4 vorgesehen. Die Zentriereinrichtungen 4 können zum Einfahren des Fahrzeugs unterhalb der Überfahrplatten 5 eingefahren, seitlich weggeklappt oder festgestellt werden.

Die Aufstandsrollen 3 sind an einem Rahmen 6 des Prüfstands befestigt. Zum Einstellen der vorgegebenen Position des längsverfahrbaren Rollensatzes II ist ein nicht gezeigter Motor vorgesehen, der über einen Linearantrieb an dem Unterbau des Rollensatzes II angreift.

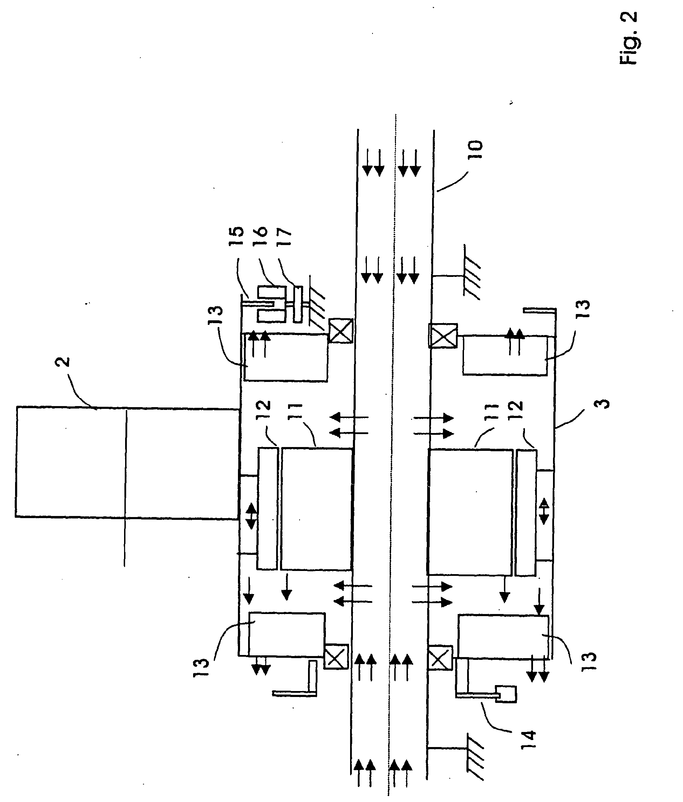

Die Fig. 2 zeigt schematisch eine Aufstandsrolle 3 mit integriertem Außenläufermotor und drehfester Mittelachse 10, die an einem Rahmen 6 des Prüfstands befestigt ist. Das Fahrzeugrad 2 steht auf dem Mantel der Aufstandsrolle 3 auf. Die Aufstandsrolle 3 ist auf der Mittelachse 10 drehbar gelagert. Der Stator 11 des Antriebsaggregats ist auf der Mittelachse 10 der Aufstandsrolle 3 befestigt. Der Rotor 12 ist als Außenläufer innen am Mantel der Aufstandsrolle 3 angebracht.

Die in Fig. 2 gezeigte Ausführungsform der Aufstandsrolle 3 zeichnet sich durch einen sehr einfachen Aufbau mit nur zwei Lagern aus.

Das in Fig. 2 dargestellte Antriebsaggregat ist als Drehstrommotor ausgebildet. Die elektrischen Zuführungen zum Stator 11 des Antriebsmotors können besonders einfach durch das Innere der drehfesten Mittelachse 10 vorgesehen sein. Da die Magnetisierungskörper des Rotors 12 eines Drehstrommotors keine elektrischen Zuführungen benötigen, ist der Aufbau des Antriebsaggregats als Außenläufermotor besonders günstig.

Der Außenmantel der Aufstandsrolle 3 bildet die Radaufstandsfläche für das Fahrzeugrad 2. Während der Simulation von Fahrzuständen auf dem Rollenprüfstand entsteht durch die Radaufstandsfläche die gewünschte Fahrbahnsimulationsfläche.

Zur Kühlung der Aufstandsrolle 3 und des Antriebsaggregats wird ein Kühlmittel durch das Innere der drehfesten Mittelachse 10 in die Aufstandsrolle 3 zugeführt. In der besonders einfachen Ausführung der Aufstandsrolle 3 wird beispielsweise Luft zum Kühlen zugeführt. Dieser Luftstrom wird in Fig. 2 durch Pfeile dargestellt.

Die Aufstandsrolle 3 in Fig. 2 weist weiterhin Luftleitkörper 13 zur Erzeugung des Luftstroms auf. Durch geeignete Anordnung der Luftleitkörper 13 kann ein Luftstrom vom Inneren der Aufstandsrolle 3 nach außen erzeugt werden, durch den die Aufstandsrolle 3 und das Antriebsaggregat gekühlt werden. Durch die Richtung des Luftstroms wird verhindert, daß Schmutzpartikel in das Innere der Aufstandsrolle 3 gelangen. Die angesaugte Luft kann durch einen nicht gezeigten Luftfilter gereinigt werden, bevor sie durch das Innere der Mittelachse 10 in das Innere der Aufstandsrolle 3 eingeleitet wird.

Zwischen Rotor 12 und dem Mantel der Aufstandsrolle 3 ist eine Hinterlüftung vorgesehen, die verhindern soll, daß der Mantel der Aufstandsrolle 3 sich infolge der Erwärmung des Antriebsaggregats erwärmt und sich die Temperatur der Radaufstandsfläche verändert. Dies würde die Kontakteigenschaften zwischen Fahrzeugreifen 2 und Aufstandsrolle 3 verändern und kann durch die in Fig. 2 gezeigte Hinterlüftung verhindert werden.

Die Aufstandsrolle 3 weist weiterhin eine Zahnscheibe 14 mit Impulsgeber zur Messung der Drehgeschwindigkeit der Aufstandsrolle 3 auf. Für die Ankopplung weiterer drehender Komponenten kann eine Riemenscheibe vorgesehen sein.

Weiterhin ist an der Aufstandsrolle 3 ein Bremsring 15 angebracht, der von einer Bremszange 16 umschlossen wird. Über die Bremszange 16 und den Bremsring 15 kann eine Bremskraft zum Verzögern oder Blockieren der Aufstandsrolle 3 eingeleitet werden. Diese Bremskraft kann durch eine geeignet angeordnete Kraftmeßdose 17 ermittelt werden.

Alternativ zu dem in Fig. 2 gezeigten Bremsring 15 kann auch eine Bremsscheibe seitlich an der Aufstandsrolle 3 angebracht werden.

Die eingeleitete Bremskraft kann z.B. zum Feststellen bzw. Blockieren der Aufstandsrolle 3 verwendet werden. Dies vereinfacht das Auffahren eines Kraftfahrzeugs auf den Prüfstand. Weiterhin kann die eingeleitete Bremskraft zum Kalibrieren/Justieren bzw. Für das Verfahren zur Ermittlung der aufgebrachten Zugkraft verwendet werden.

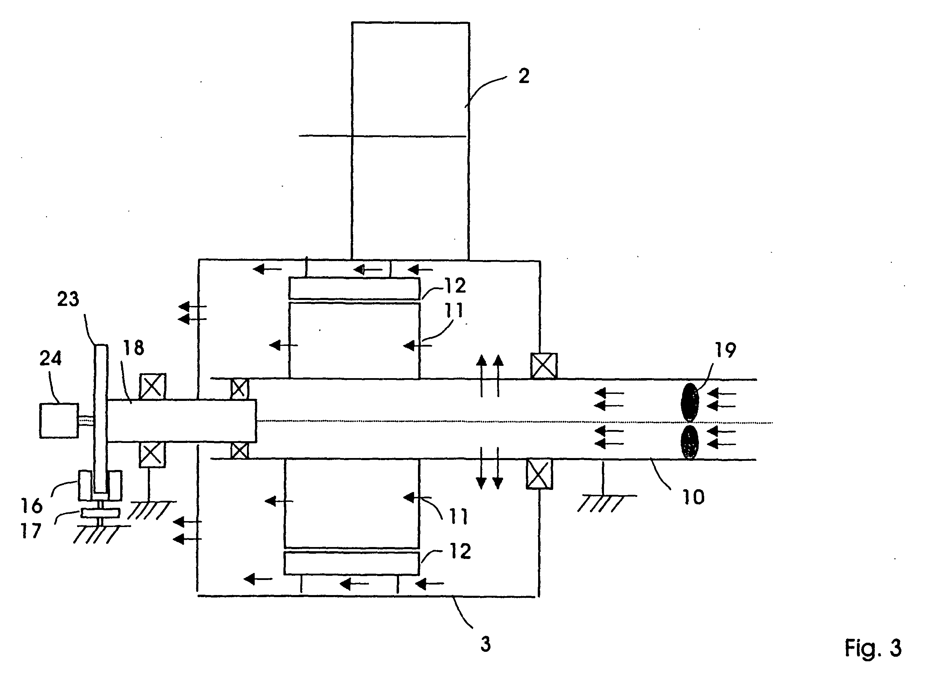

Die Fig. 3 zeigt schematisch eine Aufstandsrolle 3 mit integriertem Außenläufermotor und drehbarem Wellenzapfen 18. Der drehbare Wellenzapfen 18 ist fest mit der Aufstandsrolle 3 verbunden und in Verlängerung der Mittelachse 10 angeordnet. Der drehbare Wellenzapfen 18 ist im Rahmen 6 und an der Mittelachse 10 drehbar gelagert. Da der drehbare Wellenzapfen 18 mit der Aufstandsrolle 3 mitdreht, eignet er sich besonders zum Anbau drehender Vorrichtungen. Beispielsweise kann eine Riemenscheibe 24 für die Ankopplung weiterer drehender Komponenten oder eine Bremsscheibe 23 am drehenden Wellenzapfen 18 angebracht werden. Auch ist er gut zur Anbringung von Impulsgebern, Inkremental-Encodern oder Drehwinkelfühlern zur Messung der Drehgeschwindigkeit geeignet.

Die Fig. 3 zeigt weiterhin einen Ventilator 19 zur Zuführung von Kühlluft für die Motorkühlung. Durch diese Ausführung der Kühlluftzufuhr wird im Inneren der Aufstandsrolle 3 ein Überdruck erzeugt. Durch den Überdruck wird verhindert, daß Staub, Schmutz, Konservierungsdämpfe, Reifenabrieb oder sonstige Partikel in das Innere des Rollenkörpers gelangen. Zusätzlich kann der Ansaugbereich des Ventilators 19 durch die Ausführung in der Mittelachse 10 vor Reifenabrieb und anderen Partikeln geschützt werden. Anstelle der Luftkühlung kann auch eine Flüssigkeitskühlung vorgesehen sein. Die Zufuhr des Kühlmittels erfolgt zweckmäßigerweise durch das Innere der Mittelachse 10.

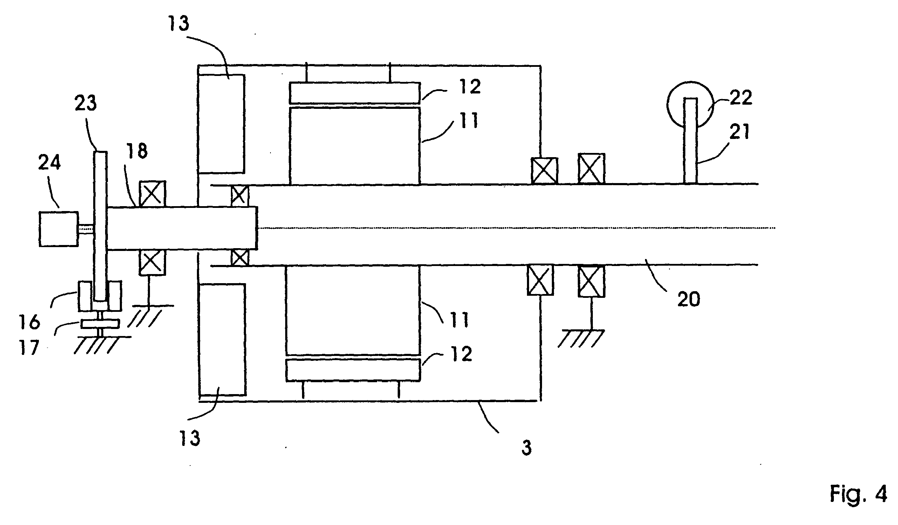

Die Fig. 4 zeigt eine schematische Darstellung einer Aufstandsrolle 3 mit integriertem Außenläufermotor und pendelnd drehbarer Welle 20, die über eine Drehmomentstütze 21 und eine Kraftmeßeinrichtung 22 an dem Rahmen 6 abgestützt ist. Die in Fig. 4 gezeigte Anordnung weist weiterhin einen drehbaren Wellenzapfen 18 auf, der fest mit der Aufstandsrolle 3 verbunden ist. Das vom Antriebsaggregat der Aufstandsrolle 3 erzeugte Drehmoment kann durch die Kraftmeßeinrichtung 22 ermittelt und/oder zum Kalibrieren/Justieren herangezogen werden. Die aus der Kraftmeßeinrichtung 22 ermittelte Referenzkraft wird bevorzugt zur Erstellung des Korrekturkennfelds für das Verfahren zum Ermitteln der Zugkraft herangezogen. Die Drehmomentstütze 21 und die Kraftmeßeinrichtung 22 können während des Betriebs des Rollenprüfstands zum Messen der Antriebskraft des Antriebsaggregats für die Ermittlung der Zugkraft verwendet werden oder aber die Drehmomentstütze 21 und die Kraftmeßeinrichtung 22 werden nur zum Kalibrieren/Justieren eingesetzt und für den Betrieb des Rollenprüfstands abgebaut.

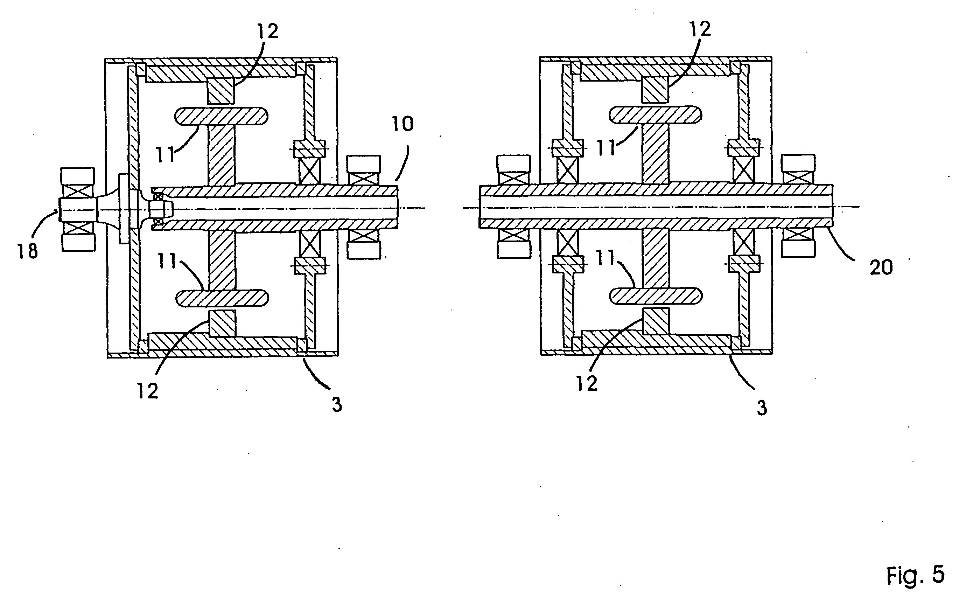

Die Fig. 5 zeigt einen Schnitt durch zwei Ausführungsbeispiele für eine Aufstandsrolle 3 nach dem Scheitelrollenprinzip. In dem linken Ausführungsbeispiel ist die Aufstandsrolle 3 auf einer Mittelachse 10 drehbar gelagert und fest mit einem drehbaren Wellenzapfen 18 verbunden. Der drehbare Wellenzapfen 18 ist zur Aufnahme von drehenden Teilen geeignet und an der Mittelachse 10 drehbar gelagert. Die Breite der Aufstandsrolle 3 beträgt in dem gezeigten Beispiel 700 mm. Der Durchmesser der Aufstandsrolle 3 entspricht bei Scheitelrollen etwa dem ein- bis zweifachen Durchmesser eines Fahrzeugrads (z.B. 900 mm). Der Durchmesser von Doppelrollen ist meist kleiner und kann beispielsweise 500 mm betragen.

In dem rechten Ausführungsbeispiel ist die Aufstandsrolle 3 drehbar auf einer pendelnd drehbaren Welle 20 gelagert. Der Stator 11 des Antriebsaggregats ist auf der Welle 20 und der Rotor 12 am Mantel der Aufstandsrolle 3 befestigt.

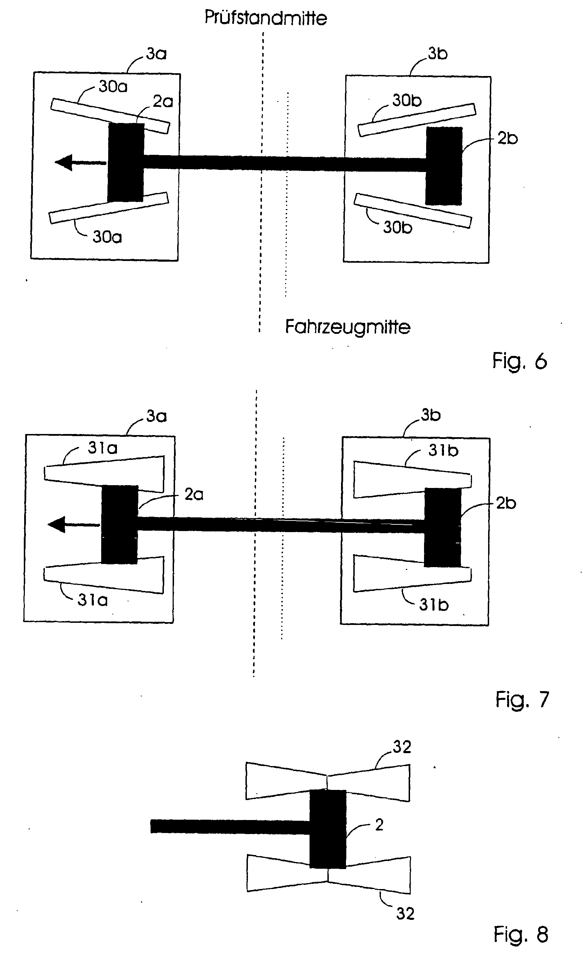

Die Fig. 6 zeigt eine mögliche Anordnung von Anlaufrollen 30 zur Zentrierung eines Fahrzeugs 1 im Prüfstand. Die als Anlaufrollen 30a und 30b ausgebildeten Zentriereinrichtungen sind an den Aufstandsrollen 3a und 3b der Fahrzeugräder 2a und 2b einer Achse derart angeordnet, daß in dem gezeigten Beispiel das Rad 2a durch die Anlaufrollen 30a eine seitliche Kraft erfährt, die das Fahrzeug 1 in die mittige Position zwischen den Aufstandsrollen 3a, 3b zurückbewegt. In Fig. 6 hat das Fahrzeug 1 eine seitliche Bewegung nach rechts ausgeführt, so daß die Fahrzeugmitte nicht mehr mit der Prüfstandsmitte übereinstimmt. Durch die Kraftwirkung wird das Fahrzeug zur Prüfstandsmitte. zurückbewegt. Je nach Anordnung der Anlaufrollen 30a, 30b erfahren die Räder 2a, 2b des zentrierten Fahrzeugs keine seitliche Kraft oder die gegensinnigen Kräfte auf die Räder 2a, 2b heben sich auf, so daß das Fahrzeug sich nicht aus der mittigen Position herausbewegt.

Die Kraftwirkung wird erfindungsgemäß dadurch verursacht, daß für das jeweilige Rad einer Fahrzeugachse mindestens eine Anlaufrolle 30a, 30b unter einem spitzen Winkel zur Längsachse der jeweiligen Aufstandsrolle 3a, 3b angeordnet ist. In dem in Fig. 6 gezeigten Beispiel sind beide Anlaufrollen 30a, 30b symmetrisch unter einem spitzen Winkel zur Längsachse der jeweiligen Aufstandsrolle 3a, 3b angeordnet. Zur Zentrierung des Fahrzeugs im Prüfstand ist es jedoch auch möglich nur eine der beiden Anlaufrollen 30a, 30b schräg anzuordnen, z.B. die vordere Anlaufrolle in Fahrzeugrichtung. Der spitze Winkel zwischen Mittelachse der Anlaufrolle 30a, 30b und Längsachse der jeweiligen Aufstandsrolle 3a, 3b kann, wie in Fig. 6 gezeigt, in Richtung zur Prüfstandsmitte oder aber nach außen angeordnet sein. Die Anlaufrollen 30a, 30b können den jeweiligen Aufstandsrollen 3a, 3b der Räder 2a, 2b einer oder mehrerer Fahrzeugachsen zugeordnet sein.

Die Fig. 7 zeigt schematisch eine mögliche Anordnung von konisch ausgebildeten Anlaufrollen 31. In dem gezeigten Ausführungsbeispiel erweitern sich die konisch ausgeformten Anlaufrollen 31a, 31b nach außen. Die Mittelachsen der Anlaufrollen 31a, 31b sind in dem gezeigten Beispiel parallel zu den Längsachsen der jeweiligen Anlaufrollen 3a, 3b angeordnet. Durch die konische Ausformung der Anlaufrollen 31a, 31b erfährt das Fahrzeug ebenfalls eine Kraft, die es im Prüfstand zentriert und gegen seitliche Bewegungen sichert. Die Wirkung dieser Kraft entspricht der bei schräg stehenden Anlaufrollen 30a, 30b.

Die Winkel, unter denen die Anlaufrollen 30, 31 zur Längsachse der jeweiligen Aufstandsrolle 3 angeordnet sind, können vorteilhaft verstellt und der fahrzeugspezifischen Fahrwerksgeometrie angepaßt werden. Auch kann ein verstellbarer Winkel zur Anpassung an die jeweilige Drehzahl bzw. Geschwindigkeit der Aufstandsrolle 3 zweckmäßig sein. Durch die Änderung des Anstellwinkels zwischen Mittelachse der Anlaufrolle 30, 31 und Längsachse der Aufstandsrolle kann die Anordnung der Anlaufrollen beispielsweise der Spur oder dem Vorlauf/Nachlauf des Fahrzeugs 1 angepaßt werden.

Die Fig. 8 zeigt eine mögliche Ausbildung der beiden Anlaufrollen 32 einer Aufstandsrolle 3, die zwei konisch ausgeformte Endabschnitte aufweist, die sich nach außen erweitern. Durch die konisch ausgeformten Endabschnitte wird das Fahrzeugrad 2 in einer mittigen Position auf der Anlaufrolle 3 geführt. Die beiden Anlaufrollen 32 wirken als Leitrolle auf ein Rad des Fahrzeugs und zentrieren dieses. Die Anlaufrollen 32 sind beispielsweise einem Vorderrad des Fahrzeugs zugeordnet.

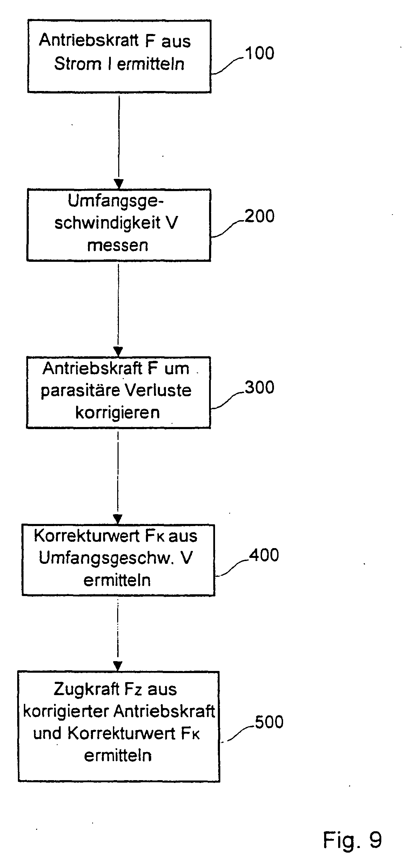

Die Fig. 9 zeigt ein Ablaufdiagramm für das Verfahren zum Ermitteln der von einer Aufstandsrolle auf ein Fahrzeugrad aufgebrachten Zugkraft.

In Schritt 100 wird aus dem Strom des Antriebsaggregats eine Antriebskraft F für die Aufstandsrolle 3 ermittelt. Dazu wird beispielsweise der lineare Zusammenhang zwischen dem momentbildenden Strom eines elektrischen Antriebs und dem erzeugten Drehmoment verwendet. Aus dem erzeugten Drehmoment kann in einfacher Weise über den Rollenhalbmesser die Antriebskraft F ermittelt werden.

In Schritt 200 wird die Umfangsgeschwindigkeit v der Aufstandsrolle 3 gemessen. Dies geschieht beispielsweise über einen am drehenden Wellenzapfen 18 angebrachten Drehwinkelgeber oder Inkremental-Encoder.

Die ermittelte Antriebskraft F wird in Schritt 300 um die parasitären Verluste F_{P} der Aufstandsrolle durch Reibung und Ventilation für die gemessene Umfangsgeschwindigkeit v korrigiert. Dies kann dadurch erfolgen, daß die parasitären Verluste F_{P} für verschiedene Umfangsgeschwindigkeiten v gespeichert oder nach einem Modell berechnet werden. Fehlende Werte können durch Interpolation ermittelt werden.

Aus der gemessenen Umfangsgeschwindigkeit v wird in Schritt 400 ein Korrekturwert F_{K} ermittelt. Die Ermittlung des Korrekturwerts F_{K} erfolgt bevorzugt aus einem Korrekturkennfeld, in dem für unterschiedliche Umfangsgeschwindigkeiten Korrekturwerte F_{K} gespeichert sind. Die Korrekturwerte F_{K} werden wie nachfolgend erläutert als Differenzen zwischen der korrigierten Antriebskraft F' und einer Referenzkraft F_{R} ermittelt. Die Ermittlung der Korrekturwerte F_{K} aus dem Korrekturkennfeld kann zusätzlich zur Umfangsgeschwindigkeit v auch unter Berücksichtigung der Antriebskraft F erfolgen.

In Schritt 500 wird die Zugkraft F_{z} aus der korrigierten Antriebskraft F' und dem Korrekturwert F_{K} ermittelt. Die durch das erfindungsgemäße Verfahren ermittelte Zugkraft F_{z} stellt einen sehr genauen Wert für die auf das Fahrzeugrad wirkende Kraft dar. Das Verfahren wird erfindungsgemäß in dem Steuerrechner des Rollenprüfstands realisiert. Die Ermittlung der Zugkraft F_{z} erfolgt ohne den aufwendigen Einsatz von Drehmoment - oder Kraftmeßeinrichtungen im Betrieb des Prüfstands.

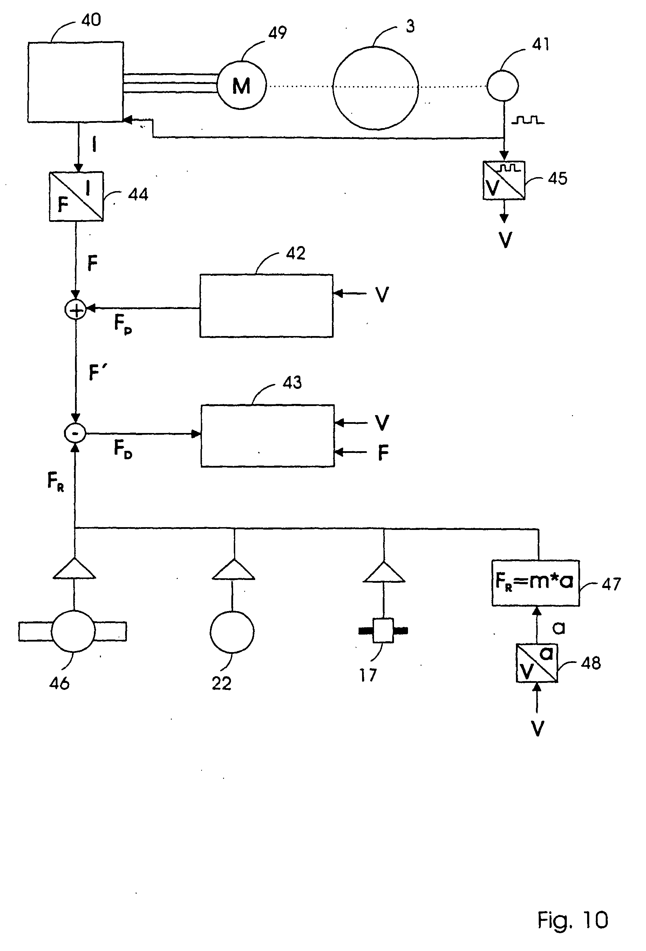

Die Fig. 10 zeigt schematisch das Vorgehen zum Ermitteln des Korrekturkennfelds für das Verfahren.

Der Drehstrommotor 49 wird von der Steuereinrichtung 40 gesteuert und treibt eine Aufstandsrolle 3. An dem drehenden Wellenzapfen 18 der Aufstandsrolle 3 ist ein Tachogenerator 41 angebracht, der als Drehwinkelgeber elektrische Signale erzeugt. Diese werden in der Umformeinrichtung 45 in ein Signal für die Umfangsgeschwindigkeit v der Aufstandsrolle 3 umgeformt.

Aus dem Strom I der Drehstrommaschine 49 wird in der Auswerteeinrichtung 44 eine Antriebskraft F für die Aufstandsrolle 3 ermittelt. Die Antriebskraft F wird anschließend um die parasitären Verluste F_{P} der Aufstandsrolle durch Reibung und Ventilation korrigiert. Hierzu wird in einer Einrichtung 42 eine Verlustkraft F_{P} für die gemessene Umfangsgeschwindigkeit v ermittelt. Die Verlustkräfte F_{P} können entweder für verschiedene Umfangsgeschwindigkeiten v in der Einrichtung 42 gespeichert oder nach einem Modell berechnet werden. Ein bevorzugtes Modell für die Verlustkräfte F_{P} wird nach einem Polynomansatz bestimmt, beispielsweise F_{P} = a + b · v + c · v².

Das Verfahren zur Ermittlung der parasitären Verluste F_{P} für die Aufstandsrolle 3 arbeitet folgendermaßen: Die Aufstandsrolle 3 wird auf eine bestimmte vorgegebene Umfangsgeschwindigkeit v beschleunigt, das Antriebsaggregat abgeschaltet und die auftretende Verzögerung der Aufstandsrolle 3 wird gemessen. Aus der gemessenen Verzögerung durch Reibung und Ventilation können die Verlustkräfte F_{P} für die jeweilige Umfangsgeschwindigkeit durch Anwendung des zweiten Newton'schen Gesetzes berechnet werden. Die so berechneten Verlustkräfte F_{P} werden in der Einrichtung 42 für unterschiedliche Umfangsgeschwindigkeiten v gespeichert oder es wird ein Modell aus den so gewonnenen Daten berechnet.

In dem Korrekturkennfeld 43 werden für unterschiedliche Umfangsgeschwindigkeiten v und gegebenenfalls auch für unterschiedliche Antriebskräfte F die Differenzen Fd = F + F_{P} - F_{R} zwischen der korrigierten Antriebskraft F' = F + F_{P} und einer Referenzkraft F_{R} gespeichert.

Die Referenzkraft F_{R} kann durch eine ganze Reihe von Maßnahmen ermittelt werden. Einmal kann eine Meßwelle 46 zwischen zwei Aufstandsrollen 3 zur Übertragung eines bestimmten Drehmoments angebracht werden, wobei eine der Aufstandsrollen gebremst und die andere zur Ermittlung ihres Korrekturkennfelds 43 angetrieben wird.

Eine andere Möglichkeit zur Ermittlung der Referenzkraft F_{R} verwendet eine Kraftmeßeinrichtung 22, die über eine Drehmomentstütze 21 mit einer pendelnd gelagerten Welle 20 des Antriebsaggregats 49 verbunden ist. Beispielsweise wird eine Kraftmeßdose über einen Meßflansch bzw. eine Drehmomentstütze 21 mit der stehenden, pendelnd gelagerten Welle 20 verbunden und ermittelt die durch den Drehstrommotor 49 aufgebrachte Kraft.

In einer dritten Möglichkeit zur Ermittlung der Referenzkraft F_{R} wird auf die Aufstandsrolle 3 durch eine Bremseinrichtung 6 eine vorgegebene Bremskraft eingeleitet. Dies kann beispielsweise über einen an der Aufstandsrolle 3 angebrachten Bremsring 15 erfolgen. Die eingeleitete Bremskraft wird zweckmäßig über eine an der Bremseinrichtung 6 angebrachte Kraftmeßeinrichtung 17 ermittelt.

Eine weitere Möglichkeit zur Ermittlung der Referenzkraft F_{R} ergibt sich durch das Beschleunigen oder Verzögern der Aufstandsrolle 3 durch das Antriebsaggregat 49 und dem Ermitteln der Rollenbeschleunigung a aus dem Signal des Tachogenerators 41. Durch Anwendung des zweiten Newton'schen Gesetzes kann die Referenzkraft F_{R} als resultierende Kraft auf die Aufstandsrolle 3 aus der gemessenen Rollenbeschleunigung a und der trägen Masse m der Aufstandsrolle 3 bestimmt werden. Dies geschieht vorzugsweise durch mehrmaliges Beschleunigen und Verzögern der Aufstandsrolle 3 ausgehend von unterschiedlichen Umfangsgeschwindigkeiten V.

Die Referenzkraft F_{R} wird nach einem oder mehreren der obengenannten Verfahren für unterschiedliche Umfangsgeschwindigkeiten v und Antriebskräfte F ermittelt und zur Bildung der Differenzkraft F_{D} herangezogen. Dabei ist es vorteilhaft, wenn die Ermittlung der Referenzkraft F_{R} in beide Kraftrichtungen (Bremsen/Beschleunigen des Fahrzeugs) und beide Fahrtrichtungen (vorwärts/rückwärts) durchgeführt wird.

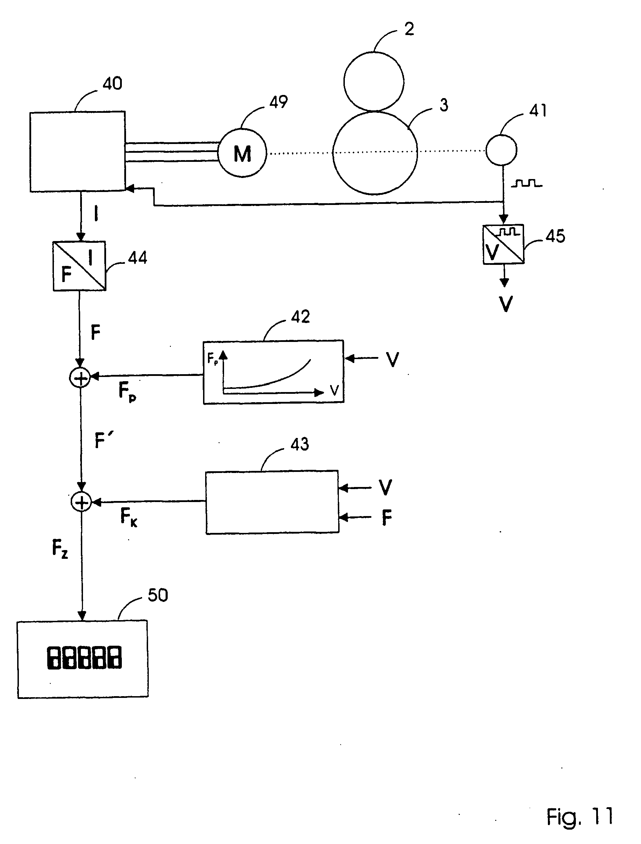

Die Fig. 11 zeigt schematisch das Verfahren zum Ermitteln der aufgebrachten Zugkraft F_{z}. Die aus dem Strom I des Drehstrommotors 49 ermittelte Antriebskraft F wird um die parasitären Verluste F_{P} der Aufstandsrolle 3 korrigiert, aus der Umfangsgeschwindigkeit v und gegebenenfalls der Antriebskraft F wird ein Korrekturwert F_{K} ermittelt und die Zugkraft F_{z} aus der korrigierten Antriebskraft und dem Korrekturwert F_{K} ermittelt: F_{Z} = F + F_{P} + F_{K}.

Die durch das Verfahren ermittelte Zugkraft F_{z} gibt die auf das Fahrzeugrad 2 aufgebrachte Kraft mit großer Genauigkeit an. Die Einflüsse der Aufstandsrolle 3, Reibung in den Lagern, Ventilationsverluste und nichtlineare Effekte, z.B. im Antriebsaggregat, werden berücksichtigt. Die ermittelte Zugkraft F_{z} kann auf einer Ausgabeeinheit 50 ausgegeben werden.

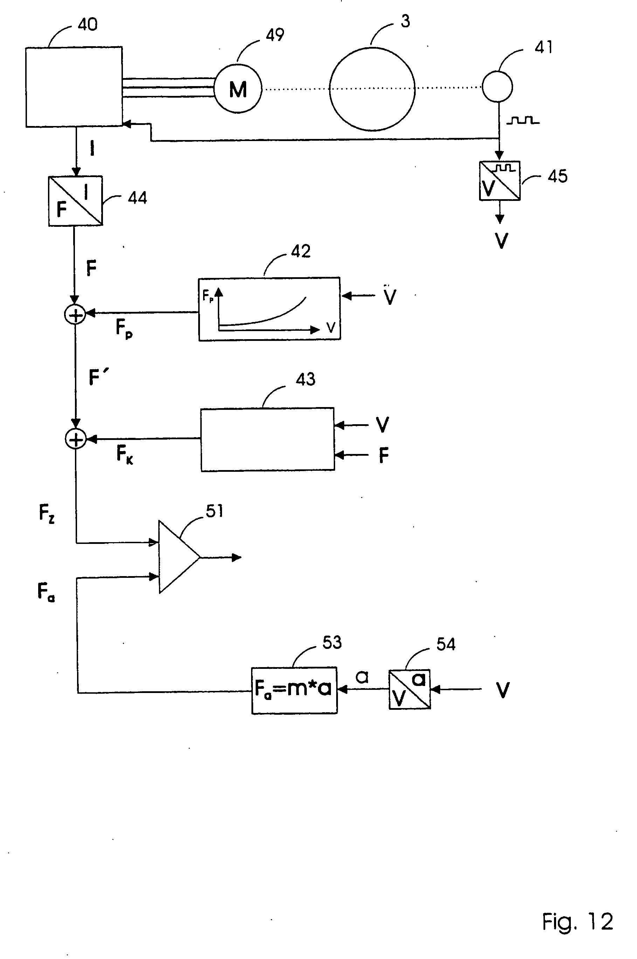

Die Fig. 12 zeigt die schematische Vorgehensweise für ein Verfahren zum Verifizieren/Prüfen des Korrekturkennfelds 43 und/oder der Einrichtung 42 zur Ermittlung der Verlustkraft F_{P}. Die Aufstandsrolle 3 wird durch das Antriebsaggregat 49 zum Erzielen einer vorgegebenen Zugkraft F_{z} beschleunigt und die Rollenbeschleunigung a wird aus dem Signal des Tachogenerators 41 ermittelt. Die resultierende Kraft Fₐ auf die Aufstandsrolle 3 wird aus der gemessenen Rollenbeschleunigung a und der trägen Masse m der Aufstandsrolle 3 bestimmt. In dem Komparator 51 werden die Zugkraft F_{z} und die resultierende Kraft Fₐ verglichen. Stimmen die in dem Korrekturkennfeld 43 und der Einrichtung 42 gespeicherten bzw. berechneten Werte mit den tatsächlichen Gegebenheiten des Rollenprüfstands überein, so sind Zugkraft F_{z} und resultierende Kraft Fₐ im wesentlichen gleich. Falls die Abweichungen zwischen F_{z} und Fₐ einen vorgegebenen Wert überschreiten, sind die ermittelten Werte für die Zugkraft F_{z} nicht mehr korrekt und eine neue Kalibrierung/Justierung des Prüfstands ist notwendig. Da dieses Verfahren zur Verifizierung der Kalibrierung/Justierung zu beliebigen Zeitpunkten ohne Um- und Anbauarbeiten am Prüfstand durchgeführt werden kann, ist es möglich es häufig durchzuführen und die Genauigkeit des Verfahrens sicherzustellen. Weiterhin ist für das Verifizierverfahren keine Meßwelle oder Drehmoment- bzw. Kraftmeßeinrichtung notwendig.

## Patentansprüche

1. Rollenprüfstand für Kraftfahrzeuge mit
- mindestens einer Aufstandsrolle (3) für jeweils ein Rad (2) des zu prüfenden Fahrzeugs (1),
- mindestens einem aus Stator (11) und Rotor (12) gebildeten Antriebsaggregat zum Antrelben oder Verzögern von jeweils einer Aufstandsrolle (3) und
- einer Steuereinheit (40) für die Antriebsaggregate, wobei
- die Aufstandsrolle (3) auf einer Mittelachse (10) drehbar gelagert ist und
- der Stator (11) des Antriebsaggregats auf der Mittelachse (10) der Aufstandsrolle (3) und der Rotor (12) als Außenläufer innen am Mantel der Aufstandsrolle (3) befestigt ist, und
**dadurch gekennzeichnet, dass**
- das Antriebsaggregat als Drehstrom-Asynchronmotor ausgebildet ist,
- eine Messelnrichtung zur Erfassung der Umfangsgeschwindigkeit der Aufstandsrolle (3) vorgesehen ist, und
der Rollenprüfstand einen Steuerrechner aufweist, der derart eingerichtet ist, dass
- aus einem Strom I des Antriebsaggregats eine Antriebskraft F für die Aufstandsrolle (3) ermittelbar ist, - die Antriebskraft F zum Erhalt einer korrigierten Antriebskraft F' um parasitäre Verluste FP der Aufstandsrolle (3) durch Reibung und Ventilation für eine gemessene Umfangsgeschwindigkeit v korrigierbar ist, - aus der Umfangsgeschwindigkeit v ein Korrekturwert FK ermittelbar ist, - eine Zugkraft FZ aus der korrigierten Antriebskraft F' und dem Korrekturwert FK ermittelbar ist, - der Korrekturwert FK aus einem Korrekturkennfeld (42) ermittelbar ist, in dem für unterschiedliche Umfangsgeschwindigkeiten v Differenzen F^{d} zwischen der korrigierten Antriebskraft F' und einer Referenzkraft FR speicherbar sind, und
- die Referenzkraft FR durch eine Kraftmesseinrichtung (22) ermittelbar ist.

2. Rollenprüfstand nach Anspruch 1, **dadurch gekennzeichnet, daß** die drehfeste Mittelachse (10) an einem Rahmen (6) des Prüfstands befestigt ist.

3. Rollenprüfstand nach Anspruch 1, **dadurch gekennzeichnet, daß** die Mittelachse (10) als pendelnd drehbare Welle (20) ausgebildet ist, die über eine Drehmomentstütze (21) und eine Kraftmeßeinrichtung (22) an dem Rahmen (6) abgestützt ist.

4. Rollenprüfstand nach Anspruch 2 oder 3, **dadurch gekennzeichnet, daß** die Aufstandsrolle (3) fest mit einem drehbaren Wellenzapfen (18) verbunden ist, der in Verlängerung der Mittelachse (10) zentriert angeordnet ist.

5. Rollenprüfstand nach Anspruch 4, **dadurch gekennzeichnet, daß** der Wellenzapfen (18) im Rahmen (6) und an der Mittelachse (10) drehbar gelagert ist.

6. Rollenprüfstand nach einem der Ansprüche 1 bis 5, **gekennzeichnet durch** zwei Aufstandsrollen (3) für jeweils ein Rad (2) des Fahrzeugs (1), deren Antriebsaggregate **durch** eine gemeinsame Stelleinheit oder derart gesteuert werden, daß die Umfangsgeschwindigkeiten der Aufstandsrollen (3) gleich sind.

7. Rollenprüfstand nach einem der Ansprüche 1 bis 6, **gekennzeichnet durch** eine Aufstandsrolle (3) für jeweils ein Rad (2) des Fahrzeugs (1), wobei der Aufstandsrolle (3) eine mechanisch mit der Aufstandsrolle gekoppelte Laufrolle (9) zugeordnet ist und das Rad (2) des Fahrzeugs (1) auf der Aufstandsrolle (3) und der Laufrolle (9) aufsteht.

8. Rollenprüfstand nach einem der Ansprüche 1 bis 7, **dadurch gekennzeichnet, daß** die Steuereinrichtung (40) dazu geeignet ist, unter Berücksichtigung spezifischer Fahrzeugdaten das Antriebsaggregat zur Simulation von ausgewählten Fahrzuständen zusteuern.

9. Rollenprüfstand nach einem der Ansprüche 1 bis 8, **dadurch gekennzeichnet, daß** der Aufstandsrolle (3) eine Bremseinrichtung (15, 16, 23) zugeordnet ist.

10. Rollenprüfstand nach Anspruch 9, **dadurch gekennzeichnet, daß** die Bremseinrichtung (15, 16, 23) eine an dem Wellenzapfen (18) befestigte Bremsscheibe (23) oder einen an der Aufstandsrolle (3) befestigten Bremsring (15) aufweist.

11. Rollenprüfstand nach Anspruch 9 oder 10, **gekennzeichnet durch** eine Kraftmeßeinrichtung (17) zur Ermittlung der aufgebrachten Bremskraft.

12. Rollenprüfstand nach einem der Ansprüche 1 bis 11, **gekennzeichnet durch** eine Innenkühlung der Aufstandsrolle (3) und des Antriebsaggregats.

13. Rollenprüfstand nach Anspruch 12, **dadurch gekennzeichnet, daß** die Innenkühlung Luftleitkörper (13) oder Flügelräder aufweist.

14. Rollenprüfstand nach Anspruch 12 oder 13, **gekennzeichnet durch** die Zuführung eines Kühlmittels **durch** das Innere der Mittelachse (10).

15. Rollenprüfstand nach einem der Ansprüche 12 bis 14, **gekennzeichnet durch** eine Hinterlüftung zwischen dem Rotor (12) und dem Mantel der Aufstandsrolle (3).

16. Rollenprüfstand nach einem der Ansprüche 1 bis 15, **dadurch gekennzeichnet, daß** zumindest ein aus zwei Aufstandsrollen (3) für die Räder (2) einer Achse des zweispurigen Fahrzeugs (1) gebildeter Rollensatz längsverfahrbar ist.

17. Rollenprüfstand nach einem der Ansprüche 1 bis 16, **gekennzeichnet durch** Einrichtungen, die dazu geeignet sind, das Fahrzeug (1) im Prüfstand zu zentrieren.

18. Rollenprüfstand nach Anspruch 17, **dadurch gekennzeichnet, daß** als Zentriereinrichtungen mindestens einer Aufstandsrolle (3) zwei Anlaufrollen (30, 31, 32) zugeordnet sind, die dazu geeignet sind, auf das aufstehende Fahrzeugrad (2) eine laterale Kraft auszüben, welche das Fahrzeug (1) auf den Aufstandsrollen (3) zentriert.

19. Rollenprüfstand nach Anspruch 18, **dadurch gekennzeichnet, daß** für das jeweilige Rad (2) einer Fahrzeugachse mindestens eine Anlaufrolle (30) unter einem spitzen Winkel zur Längsachse der jeweiligen Aufstandsrolle (3) angeordnet ist.

20. Rollenprüfstand nach Anspruch 18 oder 19, **dadurch gekennzeichnet, daß** für das jeweilige Rad (2) einer Fahrzeugachse mindestens eine Anlaufrolle (31) konisch ausgebildet ist.

21. Rollenprüfstand nach Anspruch 18 oder 20, **dadurch gekennzeichnet, daß** mindestens eine Anlaufrolle (32) zwei konisch ausgeformte Endabschnitte aufweist, die sich nach außen erweitern.

22. Rollenprüfstand nach einem der Ansprüche 18 bis 21, **dadurch gekennzeichnet, daß** mindestens eine Anlaufrolle (30, 31, 32) in ihrer Längsrichtung verfahrbar ist.

## Claims

1. A roller test bench for road vehicles, comprising
- at least one contact roller (3) for a respective wheel (2) of the vehicle (1) to be tested,
- at least one drive assembly consisting of a stator (11) and a rotor (12) for driving or decelerating a respective contact roller (3), and
- a control unit (40) for the drive assemblies, wherein
- the contact roller (3) is rotatably supported on a centre axis (10), and
- the stator (11) of the drive assembly is fixed on the centre axis (10) of the contact roller (3) and the rotor is fixed to the inside of the casing of the contact roller (3) as an external rotor, and
**characterized in that**
- the drive assembly is formed as a three-phase asynchronous motor,
- a measuring means is provided for detecting the circumferential speed of the contact roller (3), and
- the roller test bench has a control computer adapted such that
- a drive force F for the contact roller (3) can be obtained from a current I of the drive assembly,
- the drive force F can be corrected by parasitic losses FP of the contact roller (3) due to friction and ventilation for a measured circumferential speed v for obtaining a corrected drive force F',
- a correction value FK can be obtained from the circumferential speed v,
- a tensile force FZ can be obtained from the corrected drive force F' and the correction value FK,
- the correction value FK can be obtained from a correction map (42) in which differences Fd between the corrected drive force F' and a reference force FR can be stored for different circumferential speeds v,
- the reference force FR can be obtained by force measuring means (22).

2. The roller test bench according to claim 1, **characterized in that** the rotationally fixed centre axis (10) is attached to a frame (6) of the test bench.

3. The roller test bench according to claim 1, **characterized in that** the centre axis (10) is formed as a pendulous rotatable shaft (20) supported on the frame (6) via a torque arm (21) and force measuring means (22).

4. The roller test bench according to claim 2 or 3, **characterized in that** the contact roller (3) is firmly connected to a rotatable shaft pin (18) centrally disposed in extension of the centre axis (10).

5. The roller test bench according to claim 4, **characterized in that** the shaft pin (18) is rotatably supported in the frame (6) and on the centre axis (10).

6. The roller test bench according to any one of claims 1 to 5, **characterized by** two contact rollers (3) for one respective wheel (2) of the vehicle (1), the drive assemblies of which are controlled by a common adjusting unit or such that the circumferential speeds of the contact rollers (3) are the same.

7. The roller test bench according to any one of claims 1 to 6, **characterized by** a contact roller (3) for a respective wheel (2) of the vehicle (1), the contact roller (3) being associated with a roller (9) mechanically coupled to the contact roller and the wheel (2) of the vehicle (1) being supported on the contact roller (3) and the roller (9).

8. The roller test bench according to any one of claims 1 to 7, **characterized in that** the control unit (40) is adapted to control the drive assembly for simulating selected driving states by taking into account specific vehicle data.

9. The roller test bench according to any one of claims 1 to 8, **characterized in that** the contact roller (3) is associated with braking means (15, 16, 23).

10. The roller test bench according to claim 9, **characterized in that** the braking means (15, 16, 23) has a braking disk (23) fixed to the shaft pin (18) or a braking ring (15) fixed to the contact roller (3).

11. The roller test bench according to claim 9 or 10, **characterized by** force measuring means (17) for obtaining the applied braking force.

12. The roller test bench according to any one of claims 1 to 11, **characterized by** an internal cooling of the contact roller (3) and the drive assembly.

13. The roller test bench according to claim 12, **characterized in that** the internal cooling has air pipes (13) or impellers.

14. The roller test bench according to claim 12 or 13, **characterized by** supplying a coolant through the inside of the centre axis (10).

15. The roller test bench according to any one of claims 12 to 14, **characterized by** a rear ventilation between the rotor (12) and the casing of the contact roller (3).

16. The roller test bench according to any one of claims 1 to 15, **characterized in that** at least one set of rollers consisting of two contact rollers (3) for the wheels (2) of an axis of the two-track vehicle (1) can be moved longitudinally.

17. The roller test bench according to any one of claims 1 to 16, **characterized by** means that are adapted to centre the vehicle (1) in the test bench.

18. The roller test bench according to claim 17, **characterized in that** as centring means two starter rollers (30, 31, 32) are associated with at least one contact roller (3), which are adapted to apply a lateral force to the footed vehicle wheel (2) which centres the vehicle (1) on the contact rollers (3).

19. The roller test bench according to claim 18, **characterized in that** for the respective wheel (2) of a vehicle axis at least one starter roller (30) is disposed at an acute angle to the longitudinal axis of the respective contact roller (3).

20. The roller test bench according to claim 18 or 19, **characterized in that** for the respective wheel (2) of a vehicle axis at least one starter roller (31) is shaped conically.

21. The roller test bench according to claim 18 or 20, **characterized In that** at least one starter roller (32) has two conically shaped end portions that expand outward.

22. The roller test bench according to any one of claims 18 to 21, **characterized in that** at least one starter roller (30, 31, 32) can be moved in the longitudinal direction thereof.

## Revendications

1. Banc d'essai à rouleaux pour véhicules automobiles, comportant
- au moins un rouleau de contact (1) respectivement pour une roue (2) du véhicule (1) à vérifier,
- au moins une unité d'entraînement constituée par un stator (11) et par un rotor (12) et destinée à entraîner ou à ralentir un rouleau de contact (3) respectif, et
- une unité de commande (40) pour les unités d'entraînement,
- le rouleau de contact (3) étant monté mobile en rotation sur un essieu médian (10) et
- le stator (11) de l'unité d'entraînement étant fixé sur l'essieu médian (10) du rouleau de contact (3), et le rotor (12) étant fixé à titre d'induit extérieur à l'intérieur sur la jupe du rouleau de contact (3), et
**caractérisé en ce que**
l'unité d'entraînement est réalisée sous forme de moteur asynchrone triphasé,
- il est prévu un dispositif de mesure pour détecter la vitesse circonférentielle du rouleau de contact (3), et
le banc d'essai à rouleaux comprend un ordinateur de commande qui est disposé de telle sorte que
- une force d'entraînement F pour le rouleau de contact (3) est susceptible d'être déterminée à partir d'un courant 1 de l'unité d'entraînement,
- en vue d'obtenir une force d'entraînement F' corrigée, la force d'entraînement F est susceptible d'être corrigée vis-à-vis des pertes parasitaires FP du rouleau de contact (3) dues à la friction et à la ventilation, pour une vitesse circonférentielle mesurée v,
- une valeur de correction FK est susceptible d'être déterminée à partir de la vitesse circonférentielle,
- une force de traction FZ est susceptible d'être déterminée à partir de la force d'entraînement corrigée F' et de la valeur de correction FK,
- la valeur de correction FK est susceptible d'être déterminée à partir d'un champ caractéristique de correction (42) dans lequel des différences Fd entre la force d'entraînement corrigée F' et une force de référence FR sont susceptibles d'être mémorisées pour différentes vitesses circonférentielles v,
- la force de référence FR est susceptible d'être déterminée par un dispositif de mesure de force (22).

2. Banc d'essai à rouleaux selon la revendication 1, **caractérisé en ce que** l'essieu médian (10) solidaire en rotation est fixé sur un cadre (6) du banc d'essai.

3. Banc d'essai à rouleaux selon la revendication 1, **caractérisé en ce que** l'essieu médian (10) est réalisé sous la forme d'un arbre rotatif oscillant (20) qui est soutenu sur le cadre (6) par un bras de couple (21) et un dispositif de mesure de force (22)

4. Banc d'essai à rouleaux selon la revendication 2 ou 3, **caractérisé en ce que** le rouleau de contact (3) est relié solidairement à un tourillon d'arbre (18) rotatif qui est agencé en étant centré en prolongement de l'essieu médian (10).

5. Banc d'essai à rouleaux selon la revendication 4, **caractérisé en ce que** le tourillon d'arbre (18) est monté avec faculté de rotation dans le cadre (6) et sur l'essieu médian (10).

6. Banc d'essai à rouleaux selon l'une des revendications 1 à 5, **caractérisé par** deux rouleaux de contact (3) pour une roue respective (2) du véhicule (1), dont les unités d'entraînement sont commandées par un ensemble actionneur commun ou bien de telle sorte que les vitesses circonférentielles des rouleaux de contact (3) sont égales.

7. Banc d'essai à rouleaux selon l'une des revendications 1 à 6, **caractérisé par** un rouleau de contact (3) pour une roue respective (2) du véhicule (1), le rouleau de contact (3) étant associé à un galet de roulement (9) couplé mécaniquement au rouleau de contact, et la roue (2) du véhicule (1) est en contact avec le rouleau de contact (3) et avec le galet de roulement (9).

8. Banc d'essai à rouleaux selon l'une des revendications 1 à 7, **caractérisé en ce que** le dispositif de commande (40) est apte à commander l'unité d'entraînement en prenant en compte des données spécifiques au véhicule pour simuler des états de conduite sélectionnés.

9. Banc d'essai à rouleaux selon l'une des revendications 1 à 8, **caractérisé en ce que** le rouleau de contact (3) est associé à un système de freinage (15, 16, 23).

10. Banc d'essai à rouleaux selon la revendication 9, **caractérisé en ce que** le système de freinage (15, 16, 23) comprend un disque de freinage (23) fixé sur le tourillon d'arbre (18) ou bien un anneau de freinage (15) fixé sur le rouleau de contact (3).

11. Banc d'essai à rouleaux selon la revendication 9 ou 10, **caractérisé par** un dispositif de mesure de force (17) destiné à déterminer la force de freinage appliquée.

12. Banc d'essai à rouleaux selon l'une des revendications 1 à 11, **caractérisé par** un refroidissement intérieur du rouleau de contact (3) et de l'unité d'entraînement.

13. Banc d'essai à rouleaux selon la revendication 12, **caractérisé en ce que** le refroidissement intérieur comprend des corps de canalisation d'air (13) ou des roues à ailettes.

14. Banc d'essai à rouleaux selon la revendication 12 ou 13, **caractérisé par** l'alimentation d'un agent réfrigérant à travers l'intérieur de l'essieu médian (10).

15. Banc d'essai à rouleaux selon l'une des revendications 12 à 14, **caractérisé par** une ventilation par l'arrière entre le rotor (12) et la jupe du rouleau de contact (3).

16. Banc d'essai à rouleaux selon l'une des revendications 1 à 15, **caractérisé en ce qu'**au moins un lot de rouleaux, constitué par deux rouleaux de contact (3) pour les roues (2) d'un essieu du véhicule (1) à deux voies, est déplaçable longitudinalement.

17. Banc d'essai à rouleaux selon l'une des revendications 1 à 16, **caractérisé par** des moyens qui sont aptes à centrer le véhicule (1) dans le banc d'essai.

18. Banc d'essai à rouleaux selon la revendication 17, **caractérisé en ce qu'**il est prévu deux rouleaux d'accès (30, 31, 32) associés à titre de moyens de centrage à au moins un rouleau de contact (3), qui sont aptes à exercer une force latérale sur le véhicule (2) à vérifier et qui centrent le véhicule (1) sur les rouleaux de contact (3).

19. Banc d'essai à rouleaux selon la revendication 18, **caractérisé en ce qu'**il est prévu, pour la roue respective (2) d'un essieu de véhicule, au moins un rouleau d'accès (30) agencé à angle aigu par rapport à l'axe longitudinal du rouleau de contact (3) respectif.

20. Banc d'essai à rouleaux selon la revendication 18 ou 19, **caractérisé en ce qu'**il est prévu, pour la roue respective (2) d'un essieu de véhicule, au moins un rouleau d'accès (31) réalisé conique.

21. Banc d'essai à rouleaux selon la revendication 18 ou 20, **caractérisé en ce qu'**au moins un rouleau d'accès (32) comprend deux tronçons d'extrémité réalisés coniques qui vont en s'élargissant vers l'extérieur.

22. Banc d'essai à rouleaux selon l'une des revendications 18 à 21, **caractérisé en ce qu'**au moins un rouleau d'accès (30, 31, 32) est déplaçable dans sa direction longitudinale.
